# EUROPÄISCHE PATENTSCHRIFT

(11) **EP 3 409 125 B1**
(45) Veröffentlichungstag und Bekanntmachung des Hinweises auf die Patenterteilung: **07.07.2021**
(21) Anmeldenummer: 17173278.7
(22) Anmeldetag: 29.05.2017
(51) Int. Cl.: A22C 25/16

(54) **VORRICHTUNG ZUM SCHNEIDEN VON FISCHFILETS VON FLANKENGRÄTEN, FILETIERVORRICHTUNG MIT EINER SOLCHEN VORRICHTUNG SOWIE VERFAHREN ZUM SCHNEIDEN VON FISCHFILETS VON FLANKENGRÄTEN**
APPARATUS FOR CUTTING FISH FILLETS FROM FLANK BONES, FILLETING APPARATUS WITH SUCH AN APPARATUS, AND METHOD FOR CUTTING FISH FILLETS FROM FLANK BONES
DISPOSITIF D'EXTRACTION DES ARÊTES LATÉRALES À PARTIR DE FILETS DE POISSON, MACHINE DE FILETAGE AVEC UN TEL DISPOSITIF ET PROCÉDÉ D'EXTRACTION DES ARÊTES LATÉRALES À PARTIR DE FILETS DE POISSON

(43) Veröffentlichungstag der Anmeldung: 05.12.2018
(73) Patentinhaber: Nordischer Maschinenbau Rud. Baader GmbH + Co. KG, 23560 Lübeck (DE)
(72) Erfinder: Jürs, Michael, 23730 Neustadt (DE); Schroeder, Matthias, 23619 Badendorf (DE)
(74) Vertreter: Stork Bamberger Patentanwälte PartmbB

(56) Entgegenhaltungen:
- WO-A1-2016/091572
- WO-A2-2014/170163
- US-A1- 2010 255 767

## Beschreibung

Die Erfindung betrifft eine Vorrichtung, ausgebildet und eingerichtet zum Bearbeiten von geköpften Fischen, nämlich zum Schneiden der Fischfilets der vorzugsweise bereits durch ein Bauchmesseraggregat und ein Rückenmesseraggregat bearbeiteten Fische von den Flankengräten, umfassend eine Transportvorrichtung, ausgebildet und eingerichtet zum Transport der Fische in Transportrichtung T Schwanz voraus, wobei die Transportvorrichtung einen endlos umlaufenden Transportförderer mit mindestens einem Transportsattel zum Aufnehmen und Fixieren eines Fisches aufweist, ein Flankenmesseraggregat, wobei das Flankenmesseraggregat zwei Flankenmessereinheiten aufweist, die zu beiden Seiten des Transportförderers im Bereich einer Transportsattelführung einander gegenüberliegen, und jede Flankenmessereinheit ein rotierend antreibbares Kreismesser sowie eine Gegenlageanordnung für das Kreismesser umfasst, wobei das Kreismesser zu Bildung eines Schneidspaltes beabstandet zur Gegenlageanordnung angeordnet ist, sowie mindestens eine Steuerungseinrichtung zum Bewegen der Flankenmessereinheiten relativ zum Transportförderer aus einer Warteposition in eine Arbeitsposition und zurück, wobei die Gegenlageanordnungen während des Bearbeitungsprozesses zur Veränderung der Größe des Schneidspaltes ansteuerbar ausgebildet und eingerichtet sind.

Des Weiteren betrifft die Erfindung auch eine Filetiervorrichtung, ausgebildet und eingerichtet zum vollständigen Abtrennen der Fischfilets von geköpften Fischen.

Die Erfindung befasst sich auch mit einem Verfahren zum Bearbeiten von geköpften Fischen, nämlich zum Schneiden der Fischfilets der vorzugsweise bereits durch ein Bauchmesseraggregat und ein Rückenmesseraggregat bearbeiteten Fische von den Flankengräten, umfassend die Schritte: Zuführen von geköpften Fischen Schwanz voraus mittels einer einen Transportförderer umfassenden Transportvorrichtung in Transportrichtung T entlang eines Transportpfades in den Bereich eines Flankenmesseraggregats, wobei das Flankenmesseraggregat zwei Flankenmessereinheiten umfasst, die auf einander gegenüberliegen Seiten des Transportförderers liegen, Bewegen der Flankenmessereinheiten relativ zum Transportförderer aus einer Warteposition in eine Arbeitsposition, wenn die Fische mit dem vorauslaufenden Ende ihrer Bauchhöhle den Bereich der Flankenmessereinheiten erreichen, Schneiden der Fischfilets von den Flankengräten zu beiden Seiten des Transportpfads mittels jeweils einer Flankenmessereinheit, wobei die Flankengräten beim Schneiden durch einen zwischen einem rotierend antreibbaren Kreismesser und einer Gegenlageanordnung der Flankenmessereinheiten gebildeten Schneidspalt S hindurchgeführt werden.

Solche Vorrichtungen und Verfahren sind beispielsweise aus der US 2010/255767 A1 bekannt und kommen in der Fisch verarbeitenden Industrie zum Einsatz, um geköpfte und vorzugsweise auch entweidete Fische zu verarbeiten. Die Bearbeitung der Fische umfasst üblicherweise mehrere Bearbeitungsschritte an mehreren Bearbeitungsstationen. Nach dem Köpfen der Fische werden diese auf einen Transportsattel als Bestandteil einer Transportvorrichtung aufgesetzt. Dazu wird der Fisch mit der vorzugsweise geöffneten Bauchhöhle auf den Transportsattel gestülpt, wobei eine in Transportrichtung T vorauslaufende Spitze des Transportsattels im Bereich des zur Schwanzseite gerichteten Endes der Bauchhöhle, also etwa im Bereich des Anus des Fisches, liegt. Die auf dem Transportsattel aufgenommenen und fixierten Fische werden dann Schwanz voraus an den unterschiedlichen Bearbeitungsstationen entlang transportiert, derart, dass die Bearbeitungsstationen mit den Fischen in Eingriff kommen. Für das vollständige Entfernen der Fischfilets vom Grätengerüst der geköpften Fische erfolgen vorzugsweise zunächst Bauch- und Rückenschnitte. Dazu umfasst eine entsprechende Filetiervorrichtung ein Bauchmesseraggregat und ein Rückenmesseraggregat.

Mit dem Rückenmesseraggregat wird ein Rückenschnitt ausgeführt. Das Rückenmesseraggregat umfasst z.B. zwei im Wesentlichen parallel oder leicht geneigt sowie beabstandet zueinander angeordnete Kreismesser, die einen durchgehenden Rückenschnitt ausgehend vom Schwanz in Richtung des (nicht mehr vorhandenen) Kopfes über die gesamte Fischlänge ausführen. Mit dem Bauchmesseraggregat wird ein Bauchschnitt ausgeführt. Das Bauchmesseraggregat umfasst z.B. zwei im Wesentlichen parallel oder leicht geneigt sowie beabstandet zueinander angeordnete Kreismesser, die ausgehend vom Schwanzende einen Bauchschnitt etwa bis zum schwanzseitigen Beginn der Bauchhöhle ausführen. Anschließend taucht das Bauchmesseraggregat mit den Kreismessern in die Bauchhöhle ein.

Nach dem Bauch- und Rückenschnitt sind die Fischfilets, deren Flankenbereiche auch als Bauchlappen bezeichnet werden, weiterhin mit den Flankengräten (auch Rippengräten genannt) am Grätengerüst verbunden. Anders ausgedrückt liegen die Fischfilets (bestehend aus Fleisch und außenliegender Haut) zu beiden Seiten des Grätengerüsts noch auf den Flankengräten auf und sind mit diesen verbunden. Zum Lösen bzw. Abtrennen der Fischfilets von den Flankengräten, das auch als Flankenschneiden bezeichnet wird, kommt die Vorrichtung zum Schneiden der vorzugsweise bereits durch das Bauchmesseraggregat und das Rückenmesseraggregat bearbeiteten Fischfilets (die entsprechend auch als Flankenschneider bezeichnet wird) zum Einsatz. Bekannte Flankenschneider weisen die Merkmale des Oberbegriffes des Anspruches 1 auf.

Das Flankenmesseraggregat umfasst zwei Flankenmessereinheiten, die jeweils ein Kreismesser aufweisen. Die beiden Kreismesser sind auf einander gegenüberliegenden Seiten der Transportvorrichtung bzw. des Transportförderers und in einem Winkel geneigt zu einander angeordnet, derart, dass sie ausgehend von einer zentralen Führung, nämlich der Transportsattelführung, für den Transportsattel jeweils seitlich nach unten abfallend ausgerichtet sind. Die Kreismesser sind über einen gemeinsamen Antrieb oder über Einzelantriebe rotierend antreibbar. Die Flankenmessereinheiten weisen für jedes Kreismesser eine Gegenlageanordnung auf, die eine Gegenlage bzw. eine Stützfläche für die Kreismesser beim Schneidvorgang bildet. Beim Flankenschneiden liegen die Flankengräten oberhalb der Gegenlageanordnungen. Damit bilden die Gegenlageanordnungen beidseitig zum Transportförderer eine Stützfläche für die Flankengräten mit den außen mit den Flankengräten verbundenen Fischfilets. Die Gegenlageanordnungen "zwingen" die Flankengräten in eine im Wesentliche horizontale Ausrichtung bzw. in eine Ausrichtung, die der Neigung der Kreismesser entspricht. Die Kreismesser dringen zum Flankenschneiden etwa auf Höhe des Anus (also am schwanzseitigen Ende der Bauchhöhle) in den Fisch ein, und zwar zwischen die Flankengräten und das Fischfilet, wodurch das Fischfilet von den Flankengräten gelöst wird. Durch eine enge Führung der Kreismesser an den Flankengräten wird ein ausbeutestarker Schnitt ausgeführt.

Mittels der oder jeder Steuerungseinrichtung sind die Flankenmessereinheiten einzeln oder gemeinsam aus der Warteposition, in der die Kreismesser außer Eingriff mit dem Fisch liegen bzw. der Wirkbereich der Kreismesser außerhalb des Transportpfads der Fische liegt, in die Arbeitsposition, in der die Kreismesser im Eingriff mit dem Fisch sind bzw. der Wirkbereich der Kreismesser im Transportpfad liegt, so dass die Fische beim Transport entlang des Transportpfads zwangsläufig den Wirkbereich der Kreismesser durchlaufen, und zurück bewegbar. In der Warteposition liegen die Kreismesser zum einen in Ausnehmungen der zentralen Transportsattelführung, so dass die Schneiden der Kreismesser abgedeckt sind. Zum anderen liegen die Kreismesser in der Warteposition unterhalb der Gegenlageanordnung, so dass die Schneiden auch durch die Gegenlageanordnungen abgedeckt sind. In der Arbeitsposition, die vertikal nach oben versetzt zur Warteposition liegt, sind die Kreismesser mit ihren Schneiden aus den Ausnehmungen der zentralen Transportsattelführung herausbewegt, so dass die Messer einsatzbereit sind. Durch die vertikale Bewegung der Flankenmessereinheiten nach oben sind die Schneiden der Kreismesser auch oberhalb der Gegenlageanordnung positioniert, und zwar mit einem Abstand zur Gegenlageanordnung. Dieser Abstand definiert den Schneidspalt S. Der Schneidspalt S bzw. dessen Größe bestimmt die Schnittstärke sowie den geeigneten Zeitpunkt des Eingriffes des Kreismessers in den Fisch. Der Abstand bzw. die Größe des Schneidspaltes S ist grundsätzlich einstellbar, allerdings ausschließlich bei stillstehender und außer Betrieb gesetzter Vorrichtung. Für den Bearbeitungsprozess ist die einmal eingestellte Größe des Schneidspaltes S zwischen der Gegenlageanordnung und den Kreismessern fix. Das führt dazu, dass während der gesamten Bearbeitung eine gleichbleibende Schnittstärke (einem Hobel ähnelnd) existiert.

Mit dem Trennaggregat werden noch verbleibende (Rest-)Verbindungen der Fischfilets zum Grätengerüst getrennt, so dass die Fischfilets vollständig getrennt vom Grätengerüst seitlich von diesem abfallen und weiter transportiert und verarbeitet werden können.

Wie erwähnt, laufen die Fischfilets, also das Filetfleisch mit der außenliegenden Hautseite, beim Flankenschneiden grundsätzlich oberhalb der Kreismesser entlang, während die Flankengräten unterhalb der Kreismesser durch den Schneidspalt S entlanglaufen. Viele Fischarten, also insbesondere solche aus der Lachsfamilie sowie Weißfisch, weisen paarig angeordnete Bauchflossen (auch als "pelvic fins" bekannt) auf, die bauchseitig zwischen dem Anus und der Kopfseite des Fisches liegen. Der Abstand der Bauchflossen zum Anus ist unabhängig von der Größe des Fisches im Wesentlichen konstant. Der Anus bzw. dessen Position hat einen festen Bezug zur vorauslaufenden Spitze des Transportsattels. Die Bauchlappen, also die noch an den Flankengräten befindlichen Fischfilets mit ihren Bauchflossen, hängen grundsätzlich seitlich vom Transportsattel herab und liegen im Bereich der Gegenlageanordnungen auf diesen auf, so dass sie in einer im Wesentlichen horizontalen Ausrichtung bzw. in einer Ausrichtung liegen, die der Ausrichtung der Kreismesser entspricht.

Schneidet man nun mit durchgängig gleichbleibender Schnittstärke bzw. konstantem Schneidspalt, wie bei der weiter oben beschriebenen bekannten Vorrichtung, entlang der Bauchseite des gesamten Fisches, führt dies dazu, dass die Bauchflossen am Fischfilet verbleiben, da die Kreismesser zwischen den Flankengräten und dem Fleisch des Fischfilets entlanggeführt werden. Anders ausgedrückt gleiten die bereits von den Flankengräten abgetrennten Fischfilets (mit den Bauchflossen) oberhalb der Kreismesser auf diesen entlang. Dies führt dazu, dass einzelne Fischfilets, an denen die Brustflossen ganz oder teilweise noch angeordnet sind, nachgearbeitet werden müssen, üblicherweise manuell. Solche zusätzlichen und vor allem auch manuellen Nacharbeiten führen zu einem erhöhten Aufwand und damit zu erhöhten Kosten.

Der Erfindung liegt demnach die Aufgabe zugrunde, eine verbesserte und einfache Vorrichtung zum Flankenschneiden zu schaffen, mittels der bauchflossenfreie Fischfilets vom Grätengerüst entfernt werden können. Die Aufgabe besteht weiterhin darin, eine entsprechende Filetiervorrichtung zu schaffen. Die Aufgabe besteht auch darin, ein entsprechendes Verfahren vorzuschlagen.

Bei einer Vorrichtung mit den eingangs genannten Merkmalen sind die Gegenlageanordnungen während des Bearbeitungsprozesses zur Veränderung der Größe des Schneidspaltes ansteuerbar ausgebildet und eingerichtet. Hierdurch wird erreicht, dass die Größe des Schneidspaltes an geeigneten Positionen und zu gegebener Zeit verändert werden kann. Mit anderen Worten können die Gegenlageanordnungen, kurz bevor die Fische mit ihren Bauchflossen die Kreismesser erreichen, durch eine aktive Ansteuerung automatisiert nach unten bewegt werden. Dadurch fehlt die Unterstützung für die Bauchlappen. Aufgrund der fehlenden Unterstützung klappen die Bauchlappen (mit den Bauchflossen) alleine durch Schwerkraft nach unten, so dass die Kreismesser, die bisher von unten und innen (zwischen dem Fischfiletfleisch und den Flankengräten) in die Fische eingetaucht sind, um die Fischfilets vom Grätengerüst zu trennen, nunmehr von innen durch die Haut der Fischfilets nach außen schneiden. Mit anderen Worten tauchen die Bauchlappen mit den Bauchflossen unterhalb der Kreismesser in den Schneidspalt ein. Alles, was unterhalb der Kreismesser entlanggeführt wird, bleibt am Grätengerüst. Alles, was oberhalb der Kreismesser entlanggeführt wird, wird als Fischfilet vom Grätengerüst abgeschnitten. Sobald die Fische mit ihren Bauchflossen die Kreismesser passiert haben, können die Gegenlageanordnungen durch die Ansteuerung wieder nach oben bewegt werden, so dass die Bauchlappen wieder gestützt werden und der ursprüngliche Schneidspalt hergestellt ist, um die Kreismesser möglichst nah an den Flankengräten entlang zu führen. Als Schnittergebnis fallen ausbeuteoptimierte Fischfilets an, die frei von Bauchflossen und Bauchflossenresten sind. Mit anderen Worten hängen die Bauchflossen noch am Grätengerüst, während die vollständig vom Grätengerüst getrennten Fischfilets in dem Bereich, wo die Bauchflossen saßen, eine entsprechende Ausnehmung aufweisen.

Erfindungsgemäß umfasst jede Gegenlageanordnung mindestens zwei separate Gegenlageelemente, von denen ein erstes Gegenlageelement in einem einen Schneidspalt bildenden Spaltabstand zum Kreismesser und gegen eine Federkraft bewegbar an der Flankenmessereinheit angeordnet und nicht aktiv ansteuerbar ist, und das zweite Gegenlageelement zur Veränderung der Größe eines Schneidspalts bildenden Spaltabstands separat ansteuerbar auf das Kreismesser zu und von dem Kreismesser weg bewegbar an der Flankenmessereinheit angeordnet ist. Die Teilung der Gegenlageanordnung in zwei separate Gegenlageelemente vereinfacht und erleichtert das abschnittsweise Ansteuern und Bewegen der Gegenlageanordnungen und sorgt dafür, dass trotz der Vergrößerung des Schneidspaltes in einem Teilbereich eine ausreichende Unterstützung in dem anderen Teilbereich gegeben ist.

Ein besonderer Vorteil wird durch die erfindungsgemäße Ausführung erreicht, indem den Gegenlageanordnungen mindestens eine Steuerungseinrichtung zum Bewegen der Gegenlageanordnung relativ zum Kreismesser zugeordnet ist, derart, dass die Gegenlageanordnungen während des Bearbeitungsprozesses mindestens abschnittsweise relativ zum jeweiligen Kreismesser der Flankenmessereinheiten zur Veränderung der Größe des Schneidspaltes bewegbar ausgebildet sind. Durch diese abschnittsweise Ansteuerung bzw. Bewegung der Gegenlageanordnungen werden die Bauchlappen einerseits während des gesamten Bearbeitungsprozesses gestützt und andererseits zum Aussparen der Bauchflossen temporär und partiell freigegeben, so dass die Bauchlappen mit den Bauchflossen unter das Kreismesser geführt werden können.

In einer bevorzugten Weiterbildung der Erfindung weist das erste Gegenlageelement eine im Wesentlichen rechteckförmige Stützfläche auf, wobei in einem in Transportrichtung T hinteren Bereich des ersten Gegenlageelementes auf der dem Transportförderer abgewandten Seite ein Eckbereich der Stützfläche ausgespart ist, und dass das zweite im Wesentlichen sichelförmige Gegenlageelement im Bereich dieser Aussparung angeordnet ist. Beide Gegenlageelemente bilden zum Kreismesser einen Schneidspalt aus. Die Größe des Schneidspalts zwischen dem ersten Gegenlageelement und dem Kreismesser ist grundsätzlich konstant, mit Ausnahme der durch den Fisch veranlassten Auslenkung gegen die Federkraft. Die Größe des Schneidspalts zwischen dem zweiten Gegenlageelement und dem Kreismesser ist variabel, und zwar abhängig davon, welcher Bereich des Fisches sich gerade im Bereich der Kreismesser befindet. Mindestens dann, wenn die Bauchflossen die Kreismesser erreichen, wird der Schneidspalt zwischen der zweiten Gegenlageeinheit und den Kreismessern vergrößert, indem das zweite Gegenlageelement gegenüber dem Kreismesser abgesenkt wird.

Eine besonders bevorzugte Ausführungsform der Erfindung ist dadurch gekennzeichnet, dass jeder Flankenmessereinheit eine Kurvensteuerung zugeordnet ist, mittels der die Flankenmessereinheiten aus der Warteposition in die Arbeitsposition und umgekehrt bewegbar sind, und dass jeder Gegenlageanordnung eine Kurvensteuerung zugeordnet ist, mittels der die Gegenlageanordnung mindestens abschnittsweise relativ zum Kreismesser bewegbar ist, wobei die Bewegungen der Flankenmessereinheiten und der Gegenlageanordnungen einander überlagerbar sind. Die Kurvensteuerung der Flankenmessereinheiten ist derart ausgebildet und eingerichtet, dass zur Überführung der Flankenmessereinheiten aus der Warteposition in die Arbeitsposition zunächst die Kreismesser relativ zu den Gegenlageanordnungen nach oben bewegt werden, so dass die Schneiden der Kreismesser oberhalb der Gegenlageanordnungen liegen, und zeitversetzt die gesamten Flankenmessereinheiten mit den Kreismessern und den Gegenlageanordnungen nach oben bewegt werden. Beim Überführen der Flankenmessereinheiten aus der Arbeitsposition in die Warteposition erfolgen die Bewegungen in umgekehrter Reihenfolge. Mit der Kurvensteuerung, die jeder Gegenlageanordnung zugeordnet ist, werden die Gegenlageanordnungen in der Arbeitsposition relativ zu den Kreismessern angesteuert und nach unten und wieder nach oben bewegt. Dadurch ist eine konstruktiv einfache und präzise Ansteuerung der Gegenlageanordnungen während des Bearbeitungsprozesses gewährleistet. Die beiden Flankenmessereinheiten können über eine gemeinsame Kurvensteuerung oder über separate Kurvensteuerungen ansteuerbar sein. Entsprechendes gilt für die Gegenlageanordnungen.

Besonders vorteilhaft ist dem zweiten Gegenlageelement eine Kurvensteuerung zugeordnet, derart, dass das zweite Gegenlageelement aus einer ersten Position, in der das zweite Gegenlageelement die Aussparung des ersten Gegenlageelementes im Wesentlichen ausfüllt und die Größen der Schneidspalte zwischen dem ersten Gegenlageelement und dem Kreismesser und dem zweiten Gegenlageelement und dem Kreismesser im Wesentlichen gleich sind, in eine zweite Position, in der das zweite Gegenlageelement die Aussparung des ersten Gegenlageelementes freigibt und den Schneidspalt zwischen dem zweiten Gegenlageelement und dem Kreismesser vergrößert, und umgekehrt bewegbar, insbesondere schwenkbar, ist. Dadurch wird die zu bewegende Masse reduziert. Des Weiteren kann der Abschnitt, in dem die Größe des Schneidspaltes temporär vergrößert werden soll, möglichst klein gehalten werden, so dass die Bauchflossen mit minimalem Ausbeuteverlust ausgespart werden können.

In einer alternativen Ausführungsform ist jeder Flankenmessereinheit eine Kurvensteuerung zugeordnet, mittels der die Flankenmessereinheiten aus der Warteposition in die Arbeitsposition und umgekehrt bewegbar sind, und jeder Gegenlageanordnung ist ein elektrisch ansteuerbares Antriebsmittel zugeordnet, mittels dem die Gegenlageanordnung mindestens abschnittsweise relativ zum Kreismesser bewegbar ist, wobei die Bewegungen der Flankenmessereinheiten und der Gegenlageanordnungen einander überlagerbar sind. Durch das elektrisch ansteuerbare Antriebsmittel ist eine besonders präzise und vor allem zeitgenaue Ansteuerung der Gegenlageanordnungen gewährleistet.

Vorteilhafterweise ist dem zweiten Gegenlageelement ein Pneumatikzylinder zugeordnet, derart, dass das zweite Gegenlageelement aus einer ersten Position, in der das zweite Gegenlageelement die Aussparung des ersten Gegenlageelementes im Wesentlichen ausfüllt und die Größen der Schneidspalte zwischen dem ersten Gegenlageelement und dem Kreismesser und dem zweiten Gegenlageelement und dem Kreismesser im Wesentlichen gleich sind, in eine zweite Position, in der das zweite Gegenlageelement die Aussparung des ersten Gegenlageelementes freigibt und den Schneidspalt zwischen dem zweiten Gegenlageelement und dem Kreismesser vergrößert, und umgekehrt bewegbar, insbesondere linear bewegbar ist, wobei der Pneumatikzylinder mit einer Steuerungseinrichtung verbunden ist. Durch diese besonders bevorzugte Ausgestaltung sind die Vorteile einer präzisen und zeitoptimierten Ansteuerung in besonders einfacher Weise erzielbar.

In einer weiteren alternativen Weiterbildung sind sowohl den Gegenlageanordnungen als auch den Flankenmessereinheiten Antriebe zum Verstellen der Position zugeordnet, wobei die Antriebe über elektrische Verbindungen mit einer Steuerungseinrichtung verbunden sind. Durch diese besonders bevorzugte Ausgestaltung sind die Vorteile einer präzisen und zeitoptimierten Ansteuerung in besonders einfacher Weise erzielbar.

Vorteilhafterweise beinhaltet die Steuerungseinrichtung ein Steuerungsprogramm, mittels dem die Flankenmessereinheiten während des Bearbeitungsprozesses zwischen ihren Positionen und/oder jede Gegenlageanordnung oder Gegenlageelemente davon während des Bearbeitungsprozesses zur Vergrößerung des den Schneidspalt bildenden Spaltabstandes zum Kreismesser von diesem weg und zur Verringerung des Abstandes zum Kreismesser auf dieses zu bewegbar sind. Die elektrische Steuerung sämtlicher Bewegungen der Flankenmessereinheiten und der Gegenlageanordnungen ermöglicht eine abgestimmte und präzise Funktion der Vorrichtung.

Die Aufgabe wird auch durch die eingangs genannte Filetiervorrichtung gelöst, die sich durch eine Vorrichtung nach einem oder mehreren der Ansprüche 1 bis 9, ein Bauchmesseraggregat zum Bearbeiten der Bauchseite der geköpften Fische vom Schwanz bis in den Bereich des Anus der Fische sowie ein Rückenmesseraggregat zum Bearbeiten der Rückenseite der geköpften Fische über deren gesamte Länge, wobei das Bauchmesseraggregat und das Rückenmesseraggregat jeweils in Transportrichtung T vor dem Flankenmesseraggregat angeordnet sind, und ein Trennaggregat zum vollständigen Trennen der Fischfilets vom Grätengerüst der geköpften Fische, wobei das Trennaggregat in Transportrichtung T hinter dem Flankenmesseraggregat angeordnet ist, sowie eine Steuerungseinrichtung zum Steuern der Filetiervorrichtung auszeichnet. Die sich daraus ergebende Vorteile wurden bereits im Zusammenhang mit der Vorrichtung zum Flankenschneiden ausführlich beschrieben, weshalb zur Vermeidung von Wiederholungen auf die entsprechenden Passagen verwiesen wird. Solche Filetiermaschinen, die auch als Sattelfiletiermaschinen bezeichnet werden, sind erfindungsgemäß erstmals in der Lage, auch einen automatisierten Flossenschnitt auszuführen.

Die Aufgabe wird auch durch ein Verfahren mit den eingangs genannten Schritten dadurch gelöst, dass die Gegenlageanordnungen während des Schneidens der Fischfilets von den Flankengräten mindestens abschnittsweise zur temporären Vergrößerung des Schneidspalt S abgesenkt und dann wieder angehoben werden, wobei die Gegenlageanordnungen jeweils zwei Gegenlageelemente umfassen, wobei erste Gegenlageelemente beider Gegenlageanordnungen einen Spaltabstand SA1 zum Kreismesser bilden und nicht aktiv ansteuerbar sind, und zweite Gegenlageelemente beider Gegenlageanordnungen separat angesteuert werden, derart, dass sich der Spaltabstand SA2 zum Kreismesser verändert und insbesondere vergrößert, wenn die Fische mit ihren Bauchflossen die Kreismesser der Flankenmessereinheiten erreichen.

Anstelle eines im Wesentlichen geraden Trennschnittes kann durch die erfindungsgemäße Verfahrensweise eine individuelle Schnittlinie erzeugt werden, so dass der Bereich der Bauchflossen beim Schneiden ausgespart werden kann. Dadurch verbleiben die Bauchflossen am Grätengerüst, während die Fischfilets in dem Bereich, an dem die Bauchflossen saßen, eine Aussparung aufweisen. Anders ausgedrückt ermöglicht das erfindungsgemäße Verfahren eine gezielte Schnittführung, bei der die Bauchflossen "umfahren" werden. Grundsätzlich laufen Haut und Fleisch des Fischfilets/Bauchlappens oberhalb des Kreismessers entlang, während die Flankengräten unterhalb des Kreismessers durch den Schneidspalt S geführt werden. Durch das Absenken der Gegenlageanordnungen ist ausreichend Raum geschaffen, damit der Bauchlappen mit den Bauchflossen durch Schwerkraft nach unten klappen kann. Die Bauchlappen mit den Bauchflossen werden dadurch unterhalb des Kreismessers durch den vergrößerten Schneidspalt geführt. Anders ausgedrückt schneidet das Kreismesser bei abgesenkten Gegenlageanordnungen kurzzeitig von innen durch die Haut nach außen. Dadurch werden die Bauchlappen mit den Bauchflossen unterhalb des Kreismessers entlanggeführt, bis die Gegenlageanordnungen wieder nach oben gesteuert werden, wobei das Kreismesser dann von außen durch die Haut nach innen schneidet, so dass Haut und Fleisch dann wieder vollständig oberhalb des Kreismessers laufen, während die Flankengräten unterhalb des Kreismessers durch den Schneidspalt S geführt werden.

Eine bevorzugte Weiterbildung ist dadurch gekennzeichnet, dass die Fische vor dem Flankenschneiden mittels eines Bauchmesseraggregats und eines Rückenmesseraggregats bearbeitet werden, und dass die Fische nach dem Flankenschneiden mittels eines Trennaggregats vollständig vom Grätengerüst gelöst werden.

Besonders bevorzugt wird das Verfahren mit einer Filetiervorrichtung nach Anspruch 10 ausgeführt. Zur Vorteilsbeschreibung wird zur Vermeidung von Wiederholungen auf die Ausführungen zur Vorrichtung zum Flankenschneiden verwiesen.

Weitere zweckmäßige und/oder vorteilhafte Merkmale und Weiterbildungen zur Vorrichtung zum Flankenschneiden sowie zur Filetiervorrichtung einerseits und zum Verfahren ergeben sich aus den Unteransprüchen und der Beschreibung. Besonders bevorzugte Ausführungsformen der Vorrichtungen sowie das Verfahrensprinzip werden anhand der beigefügten Zeichnung näher erläutert. In der Zeichnung zeigt:
- Fig. 1: eine schematische und ausschnittsweise Darstellung der Vorrichtung zum Flankenschneiden mit den Flankenmessereinheiten in der Warteposition und der Gegenlageanordnung in einer ersten (Stütz-)Stellung,
- Fig. 2: die Vorrichtung gemäß Figur 1 mit den Flankenmessereinheiten in der Warteposition, wobei der Transportsattel in einer in Transportrichtung T vorgerückten Position steht, und der Gegenlageanordnung in einer zweiten (Stütz- und Freigabe-)Stellung, bei der ein Gegenlageelement in einer den Schneidspalt vergrößernden Position steht,

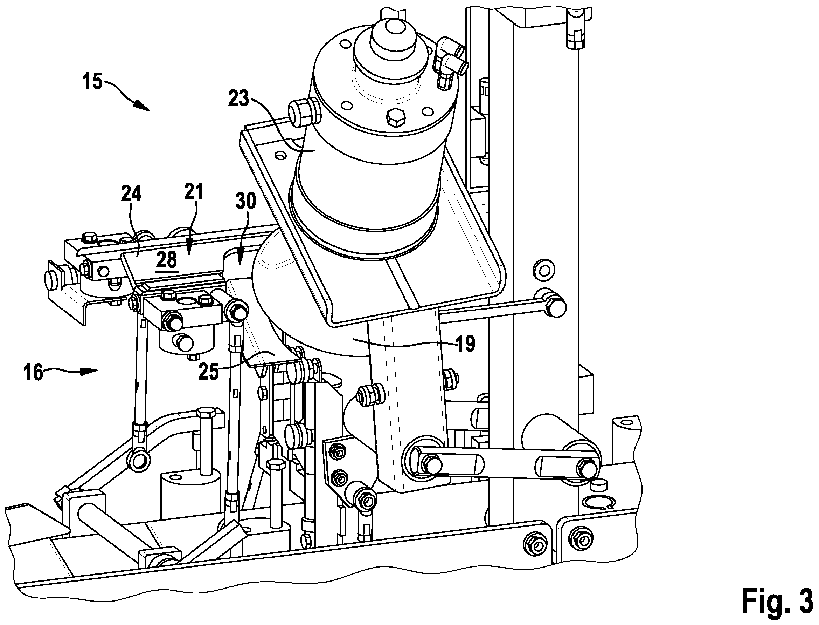

- Fig. 3: eine weitere Ansicht der Vorrichtung zum Flankenschneiden gemäß der Figur 2,

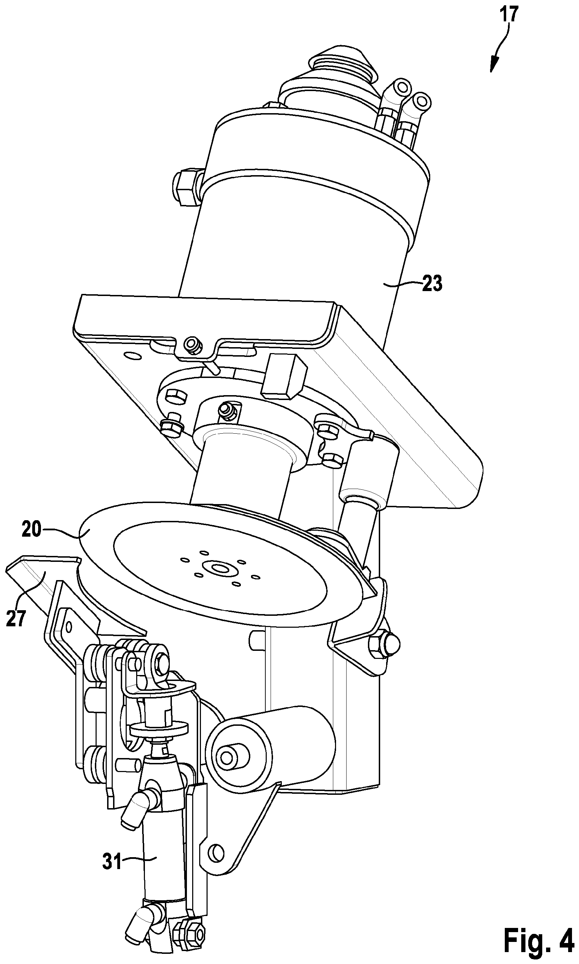

- Fig. 4: eine schematische und ausschnittsweise Darstellung einer Flankenmessereinheit,

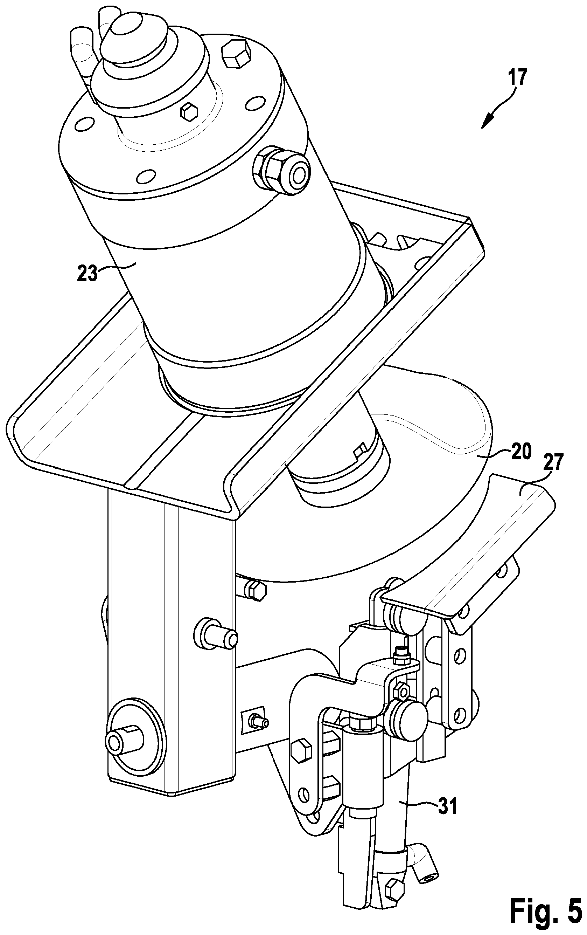

- Fig. 5: eine weitere Ansicht der Flankenmessereinheit gemäß Figur 4,
- Fig. 6: eine schematische Darstellung einer Filetiervorrichtung mit einer Vorrichtung zum Flankenschneiden gemäß den Figuren 1 bis 5, und
- Fig. 7: eine schematische Darstellung der Messeraggregate der Filetiervorrichtung gemäß Figur 6.

Die in der Zeichnung dargestellte Vorrichtung 10 dient zum Schneiden von Fischfilets von Flankengräten. Genauer ist diese Vorrichtung 10 zum Bearbeiten von geköpften Fischen 11, nämlich zum Schneiden der Fischfilets der vorzugsweise bereits durch ein Bauchmesseraggregat und ein Rückenmesseraggregat bearbeiteten Fische von den Flankengräten ausgebildet und eingerichtet. Die Vorrichtung 10 umfasst eine Transportvorrichtung 12, ausgebildet und eingerichtet zum Transport der Fische 11 in Transportrichtung T Schwanz voraus, wobei die Transportvorrichtung 12 einen endlos umlaufenden Transportförderer 13 mit mindestens einem Transportsattel 14 zum Aufnehmen und Fixieren eines Fisches 11 aufweist. Die Vorrichtung 10 umfasst weiterhin ein Flankenmesseraggregat 15, wobei das Flankenmesseraggregat 15 zwei Flankenmessereinheiten 16, 17 aufweist, die zu beiden Seiten des Transportförderers 13 im Bereich einer Transportsattelführung 18 einander gegenüberliegen, und jede Flankenmessereinheit 16, 17 ein rotierend antreibbares Kreismesser 19, 20 sowie eine Gegenlageanordnung 21, 22 für das Kreismesser 19, 20 umfasst, wobei das Kreismesser 19, 20 zur Bildung eines Schneidspaltes S beabstandet zur Gegenlageanordnung 21, 22 angeordnet ist, sowie mindestens eine (nicht explizit dargestellte) Steuerungseinrichtung zum Steuern der Flankenmessereinheiten 16, 17 relativ zum Transportförderer 13 aus einer Warteposition in eine Arbeitsposition und zurück. In der Warteposition sind die Schneiden der Kreismesser 19, 20 durch die Transportsattelführung 18 mindestens teilweise abgedeckt. Zum Bewegen der Kreismesser 19, 20 in ihre Arbeitsposition werden diese nach oben gesteuert, derart, dass die Schneiden der Kreismesser 19, 20 oberhalb der Transportsattelführung 18 frei liegen.

Diese Vorrichtung 10 zeichnet sich erfindungsgemäß dadurch aus, dass die Gegenlageanordnungen 21, 22 während des Bearbeitungsprozesses zur Veränderung der Größe des Schneidspaltes S ansteuerbar ausgebildet und eingerichtet sind. Das bedeutet, dass zusätzlich zum Einstellen der Größe des Schneidspaltes S vor oder nach dem Bearbeitungsprozess, also während der Stillstandphase der Vorrichtung 10, um einerseits die Schnittstärke zu bestimmen und andererseits den geeigneten Zeitpunkt für den Eingriff der Kreismesser 19, 20 in den Fisch 11 zu bestimmen, eine Anpassung der Größe des Schneidspaltes S beim Bearbeiten bzw. Schneiden der Fischfilets von den Flankengräten gewährleistet ist. Dadurch kann eine individuelle Schnittführung erreicht werden, indem die Größe des Schneidspaltes S vorzugsweise für jeden Fisch 11 und insbesondere für jede Position der Kreismesser 19, 20 im Fisch verändert werden kann. Anders ausgedrückt wird durch die Bewegung der Gegenlageanordnungen 21, 22 nach unten, also weg vom Kreismesser 19, 20 zur Vergrößerung des Schneidspaltes S, Platz geschaffen, der benötigt wird, damit die Bauchlappen mit den Bauchflossen unter die Kreismesser 19, 20 laufen bzw. unterhalb der Kreismesser 19, 20 entlanggeführt werden können, so dass diese am Grätengerüst verbleiben.

Der Transportförderer 13 umfasst vorzugsweise mehrere Transportsattel 14. Mittels der Transportsattel 14 werden die geköpften Fische 11 entlang eines Transportpfads bzw. Bearbeitungspfads in den und durch den Wirkbereich des Flankenmesseraggregats 15 transportiert. Die Transportvorrichtung 12 bzw. der Transportförderer 13 kann kontinuierlich oder getaktet angetrieben werden. Vorzugsweise ist der oder jeder Transportsattel 14 an einer endlos umlaufenden Transportkette oder dergleichen als Transportförderer 13 lösbar angeordnet. Die beiden Kreismesser 19, 20 sind vorzugsweise geneigt zueinander und zur Transportsattelführung 18 ausgerichtet. Genauer fallen die Kreismesser 19, 20 bevorzugt ausgehend von der Transportsattelführung 18 nach außen und schräg unten ab. Vorzugsweise ist der Neigungswinkel der Kreismesser 19, 20 - bezogen auf die Transportsattelführung 18 - einstellbar. Jedes Kreismesser 19, 20 kann über einen eigenen Antrieb 23 verfügen. Es ist alternativ auch möglich, dass die Kreismesser 19, 20 über einen gemeinsamen Antrieb antreibbar sind. Die beiden den Kreismessern 19, 20 zugeordneten Gegenlageanordnungen 21, 22 können separat oder gekoppelt miteinander ausgebildet sein. Zwischen den Kreismessern 19, 20 und der jeweils zugeordneten Gegenlageanordnung 21, 22 ist - zumindest während des Bearbeitungs- bzw. Schneidprozesses - der Schneidspalt S gebildet. Die Größe des Schneidspaltes S ist einstellbar.

Vorzugsweise ist den Gegenlageanordnungen 21, 22 mindestens eine Steuerungseinrichtung zum Bewegen der Gegenlageanordnung 21, 22 relativ zum Kreismesser 19, 20 zugeordnet, derart, dass die Gegenlageanordnungen 21, 22 während des Bearbeitungsprozesses mindestens abschnittsweise relativ zum jeweiligen Kreismesser 19, 20 der Flankenmessereinheiten 16, 27 zur Veränderung der Größe des Schneidspaltes S bewegbar ausgebildet sind. Durch die Steuerungseinrichtung können die Gegenlageanordnungen 21, 22 gezielt vom Kreismesser 19, 20 weg oder auf dieses zu bewegt werden. Die Steuerungseinrichtung kann optional mechanisch und/oder elektrisch ausgebildet sein. In einer ersten Ausführung ist jeder Gegenlageanordnung 21, 22 eine separate Steuerungseinrichtung zugeordnet. In einer weiteren Ausführung ist eine gemeinsame Steuerungseinrichtung für beide Gegenlageanordnungen 21, 22 vorgesehen. Durch die oder jede Steuerungseinrichtung können die Gegenlageanordnungen 21, 22 teil- bzw. abschnittsweise relativ zum Kreismesser 19, 20 hoch und runter bewegt werden.

Erfindungsgemäß umfasst jede Gegenlageanordnung 21, 22 mindestens zwei separate Gegenlageelemente 24, 25; 26, 27, von denen ein erstes Gegenlageelement 24, 26 in einem einen Schneidspalt S bildenden Spaltabstand S_{A1} zum Kreismesser 19, 20 und gegen eine Federkraft bewegbar an der Flankenmessereinheit 15, 16 angeordnet und nicht aktiv ansteuerbar ist, und das zweite Gegenlageelement 25, 27 zur Veränderung der Größe eines Schneidspalts S bildenden Spaltabstands S_{A2} separat ansteuerbar auf das Kreismesser 19, 20 zu und von dem Kreismesser 19, 20 weg bewegbar an der Flankenmessereinheit 16, 17 angeordnet ist. Dass die ersten Gegenlageelemente 24, 26 nicht aktiv ansteuerbar sind, bedeutet, dass sie lediglich durch den Fisch 11 selbst gegen die Federkraft ausweichbar an den Flankenmessereinheiten 16, 17 angeordnet sind. Dazu ist das erste Gegenlageelement 24, 26 vorzugsweise schwenkbar um eine Drehachse D gelagert. Anstelle einer Feder zur Aufbringung der Federkraft können auch Druckzylinder oder dergleichen zur Aufbringung einer Haltekraft vorgesehen sein.

Das jeweils erste Gegenlageelement 24, 26 weist eine im Wesentlichen rechteckförmige Stützfläche 28, 29 auf, wobei in einem in Transportrichtung T hinteren Bereich des ersten Gegenlageelementes 24, 26 auf der dem Transportförderer 13 abgewandten Seite ein Eckbereich der Stützfläche 28, 29 zur Bildung einer Aussparung 30 ausgespart ist. Dadurch weist die Stützfläche 28, 29 eine einem "Fleischerbeil" ähnlich Form auf. Die Stützfläche 28, 29 dient in ersten Linie der Unterstützung der Grätenenden (Wirbelfortsätze) der Bauchgräten des Fisches 11. Die Grundform der Stützflächen 28, 29 kann variieren, solange die Grätenenden eine ausreichende Unterstützung erhalten und ein Teilbereich der Stützflächen 28, 29 auf der den Kreismessern 19, 20 zugewandten Seiten ausgespart ist.

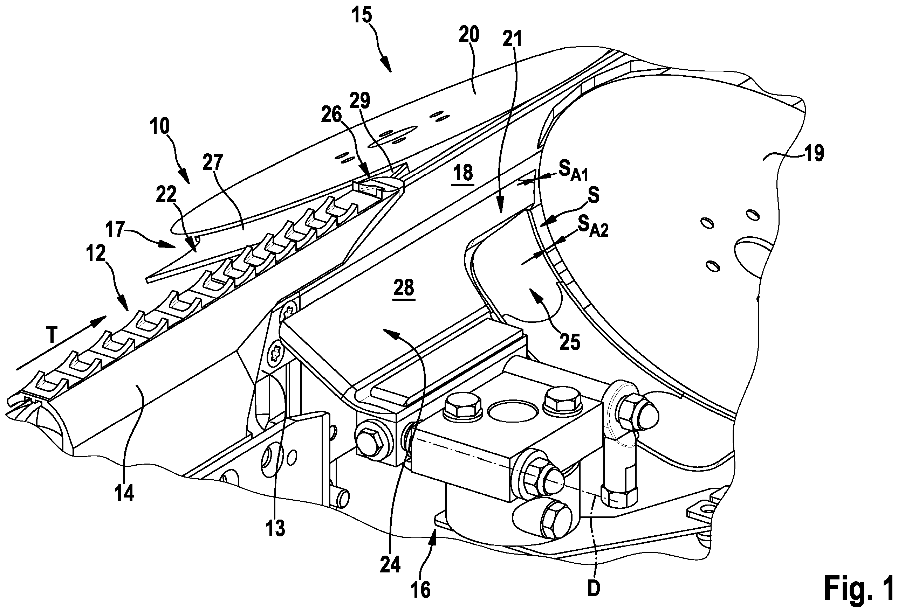

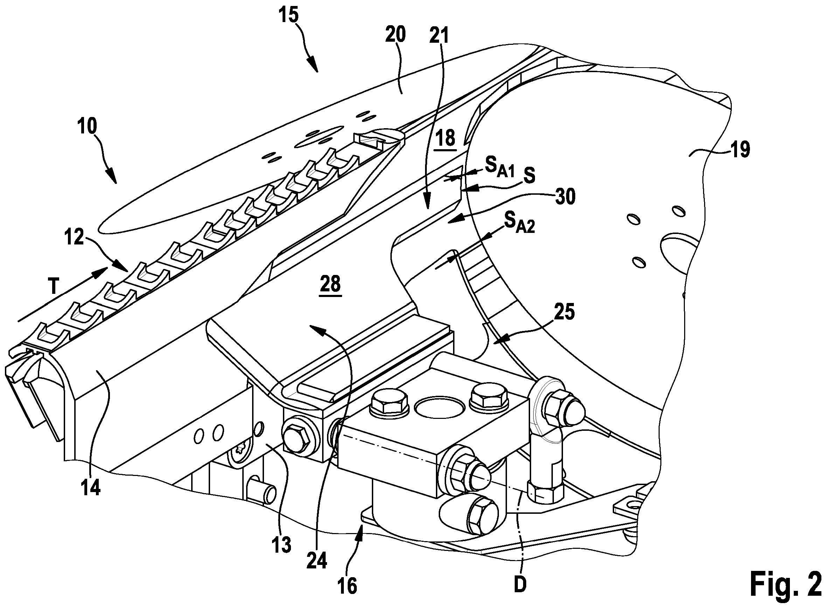

Das jeweils zweite Gegenlageelement 25, 27 weist eine im Wesentlichen sichelförmige oder halbmondförmige Form auf und ist im Bereich dieser Aussparung 30 angeordnet. Das bedeutet, dass das zweite Gegenlageelement 25, 27 grundsätzlich in einer oberen Position steht, in der der Spaltabstand S_{A1} zwischen dem ersten Gegenlageelement 24, 26 und dem Kreismesser 19, 20 einerseits und der Spaltanstand S_{A2} zwischen dem zweiten Gegenlageelement 25, 27 und dem Kreismesser 19, 20 andererseits etwa gleich groß ist (siehe z.B. Figur 1). Aus dieser oberen Position ist das zweite Gegenlageelement 25, 27 in eine untere Position (siehe z.B. Figur 2) bewegbar, in der der Spaltabstand S_{A1} zwischen dem ersten Gegenlageelement 24, 26 und dem Kreismesser 19, 20 kleiner ist als der Spaltanstand S_{A2} zwischen dem zweiten Gegenlageelement 25, 27 und dem Kreismesser 19, 20. Mit anderen Worten ist in der unteren Position des zweiten Gegenlageelementes 25, 27 ausreichend Raum geschaffen, damit das freie Ende des Bauchlappens mit den Bauchflossen unterhalb der Kreismesser 19, 20 entlanggeführt werden kann. Auch die Grundform des zweiten Gegenlageelementes 25, 27 ist variabel. Das bedeutet, dass die zweiten Gegenlageelemente 25, 27 auch eine andere Form als die sichelförmige Form aufweisen können, solange einerseits die Stützfunktion in der oberen Position gewährleistet ist und andererseits eine Relativbewegung zum ersten Gegenlageelement 24, 26 kollisionsfrei realisierbar ist.

In einer ersten Ausführungsform ist jeder Flankenmessereinheit 16, 17 eine Kurvensteuerung zugeordnet, mittels der die Flankenmessereinheiten 16, 17 aus der Warteposition in die Arbeitsposition und umgekehrt bewegbar sind. Die auf und ab bzw. hoch und runter Bewegung der Flankenmessereinheiten 16, 17, also die Verstellung der Position der Flankenmessereinheiten 16, 17, kann durch eine gemeinsame Kurvensteuerung für beide Flankenmessereinheiten 16, 17 ausgeübt werden. Optional kann auch jeder Flankenmessereinheit 16, 17 eine separate Kurvensteuerung zugeordnet sein. Entsprechend kann auch jeder Gegenlageanordnung 21, 22 eine separate Kurvensteuerung zugeordnet sein, mittels der die Gegenlageanordnung 21, 22 mindestens abschnittsweise relativ zum Kreismesser 19, 20 bewegbar ist, wobei die Bewegungen der Flankenmessereinheiten 16, 17 und der Gegenlageanordnungen 21, 22 einander überlagerbar sind. Optional kann den Gegenlageanordnungen 21, 22 auch eine gemeinsame Kurvensteuerung zugeordnet sein. Erfindungsgemäß sind die Gegenlageanordnungen 21, 22 mindestens zweiteilig ausgebildet. Dabei ist dem zweiten Gegenlageelement 25, 27 eine Kurvensteuerung zugeordnet, derart, dass das zweite Gegenlageelement 25, 27 aus einer ersten Position, in der das zweite Gegenlageelement 25, 27 die Aussparung 30 des ersten Gegenlageelementes 24, 26 im Wesentlichen ausfüllt und die Größen der Schneidspalte S bzw. Spaltabstände S_{A1} zwischen dem ersten Gegenlageelement 24, 26 und dem Kreismesser 19, 20 und S_{A2} zwischen dem zweiten Gegenlageelement 25, 27 und dem Kreismesser 19, 20 im Wesentlichen gleich sind, in eine zweite Position, in der das zweite Gegenlageelement 25, 27 die Aussparung 30 des ersten Gegenlageelementes 24, 26 freigibt und den Schneidspalt S bzw. den Spaltabstand S_{A2} zwischen dem zweiten Gegenlageelement 25, 27 und dem Kreismesser 19, 20 vergrößert, und umgekehrt bewegbar, insbesondere schwenkbar, ist.

In einem weiteren, besonders bevorzugten Ausführungsform der Vorrichtung 10 ist wiederum jeder Flankenmessereinheit 16, 17 eine - bereits weiter oben im Zusammenhang mit der ersten Ausführungsform beschriebene - Kurvensteuerung zugeordnet, mittels der die Flankenmessereinheiten 16, 17 aus der Warteposition in die Arbeitsposition und umgekehrt bewegbar sind. Der oder jeder Gegenlageanordnung 21, 22 ist in dieser Ausführungsform jedoch ein elektrisch ansteuerbares Antriebsmittel zugeordnet, mittels dem die Gegenlageanordnung 21, 22 mindestens abschnittsweise relativ zum Kreismesser 19, 20 bewegbar ist, wobei die Bewegungen der Flankenmessereinheiten 16, 17 und der Gegenlageanordnungen 21, 22 einander überlagerbar sind.

Vorteilhafterweise ist dem zweiten Gegenlageelement 25, 27 ein Pneumatikzylinder 31 zugeordnet, derart, dass das zweite Gegenlageelement 25, 27 aus einer ersten Position, in der das zweite Gegenlageelement 25, 27 die Aussparung 30 des ersten Gegenlageelementes 24, 26 im Wesentlichen ausfüllt und die Größen der Schneidspalte S bzw. Spaltabstände S_{A1} zwischen dem ersten Gegenlageelement 24, 26 und dem Kreismesser 19, 20 und S_{A2} zwischen dem zweiten Gegenlageelement 25, 27 und dem Kreismesser 19, 20 im Wesentlichen gleich sind, in eine zweite Position, in der das zweite Gegenlageelement 25, 27 die Aussparung 30 des ersten Gegenlageelementes 24, 26 freigibt und den Schneidspalt S bzw. den Spaltabstand S_{A2} zwischen dem zweiten Gegenlageelement 25, 27 und dem Kreismesser 19, 20 vergrößert, und umgekehrt insbesondere linear bewegbar ist, wobei der Pneumatikzylinder 31 mit einer Steuerungseinrichtung verbunden ist. Zur Ansteuerung z.B. von Ventilen einer Druckluftversorgung für den Pneumatikzylinder 31 können z.B. elektrische Leitungen oder dergleichen vorgesehen sein.

Grundsätzlich ist eine Schwenkbewegung des zweiten Gegenlageelementes 25, 27 realisierbar. Vorzugsweise sind die zweiten Gegenlageelemente 25, 27 jedoch zur Ausübung einer durch den Pneumatikzylinder 31 ausgelösten Linearbewegung ausgebildet und eingerichtet. Es ist möglich, dass ein gemeinsamer Pneumatikzylinder 31 für die beiden zweiten Gegenlageelemente 25, 27 vorgesehen ist. Bevorzugt ist jedoch jedem zweiten Gegenlageelement 25, 27 ein separater Pneumatikzylinder 31 zugeordnet ist. Anstelle des Pneumatikzylinders 31 können auch andere elektrisch ansteuerbare Stellelemente eingesetzt werden.

Die Vorrichtung 10 kann über mehrere Steuerungseinrichtungen verfügen, die mittels einer übergeordneten Steuerungseinrichtung angesteuert werden. Die Vorrichtung 10 kann jedoch auch über eine einzelne zentrale Steuerungseinrichtung verfügen, mittels der die einzelnen Komponenten der Vorrichtung 10, die ansteuerbar sind, angesteuert werden.

In einer weiteren Ausführungsform können sowohl den Gegenlageanordnungen 21, 22 als auch den Flankenmessereinheiten 16, 17 elektrisch ansteuerbare Antriebsmittel zum Verstellen der Positionen zugeordnet sind, wobei die Antriebsmittel über elektrische Verbindungen mit einer Steuerungseinrichtung verbunden sind. Als Positionen sind insbesondere die Warteposition und Arbeitsposition der Flankenmessereinheiten 16, 17 - relativ zur Transportsattelführung - sowie die unterschiedlichen Stellungen der Gegenlageanordnungen 21, 22 bzw. der zweiten Gegenlageelemente 25, 27 relativ zum Kreismesser 19, 20 zu benennen.

Optional kann die oder jede Steuerungseinrichtung mindestens ein Steuerungsprogramm beinhalten, mittels dem die Flankenmessereinheiten 16, 17 während des Bearbeitungsprozesses zwischen ihren Positionen und/oder jede Gegenlageanordnung 21, 22 oder zweite Gegenlageelemente 25, 27 davon während des Bearbeitungsprozesses zur Vergrößerung des den Schneidspalt S bildenden Spaltabstandes S_{A2} zum Kreismesser 19, 20 von diesem weg und zur Verringerung des Spaltabstandes S_{A2} zum Kreismesser 19, 20 auf dieses zu bewegbar sind.

In einer weiteren optionalen Ausführung können auch - vorzugsweise optische - Überwachungsmittel vorgesehen sein, die auf den Bereich der Gegenlageanordnungen 21, 22 und der Kreismesser 19, 20 gerichtet sind. Die Überwachungsmittel können ebenfalls an eine oder die Steuerungseinrichtung angeschlossen sein, um die ermittelten Informationen, z.B. die Lage/Position der Fische 11 zum Kreismesser 19, 20 und/oder zur Gegenlageanordnung 21, 22, zur Steuerung insbesondere der zweiten Gegenlageelementen 25, 27 verwenden zu können.

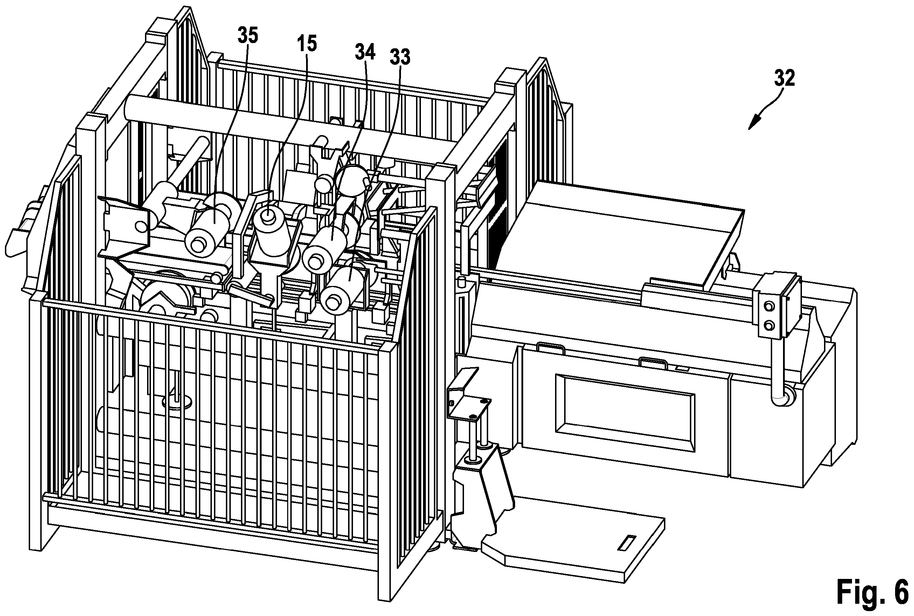

Die Vorrichtung 10 zum Flankenschneiden kann als Einzelvorrichtung oder auch als Nachrüstsatz ausgebildet sein. Bevorzugt ist die Vorrichtung 10 zum Flankenschneiden jedoch Bestandteil einer Filetiervorrichtung 32 (siehe z.B. Figur 6). Die Filetiervorrichtung 32 ist zum vollständigen Abtrennen der Fischfilets von geköpften Fischen 11 ausgebildet und eingerichtet. Die Filetiervorrichtung 32 umfasst eine Vorrichtung 10 nach einem oder mehreren der Ansprüche 1 bis 10, wie sie zuvor ausführlich beschrieben wurde, ein Bauchmesseraggregat 33 zum Bearbeiten der Bauchseite der geköpften Fische 11 vom Schwanz bis zum Beginn der Bauchhöhle der Fische 11 bzw. bis zum Köpfschnitt sowie ein Rückenmesseraggregat 34 zum Bearbeiten der Rückenseite der geköpften Fische 11 über deren gesamte Länge, wobei das Bauchmesseraggregat 33 und das Rückenmesseraggregat 34 jeweils in Transportrichtung T vor dem Flankenmesseraggregat 15 der Vorrichtung 10 angeordnet sind, und ein Trennaggregat 35 zum vollständigen Trennen der Fischfilets vom Grätengerüst der geköpften Fische 11, wobei das Trennaggregat 35 in Transportrichtung T hinter dem Flankenmesseraggregat 15 angeordnet ist, sowie eine Steuerungseinrichtung zum Steuern der Filetiervorrichtung 32.

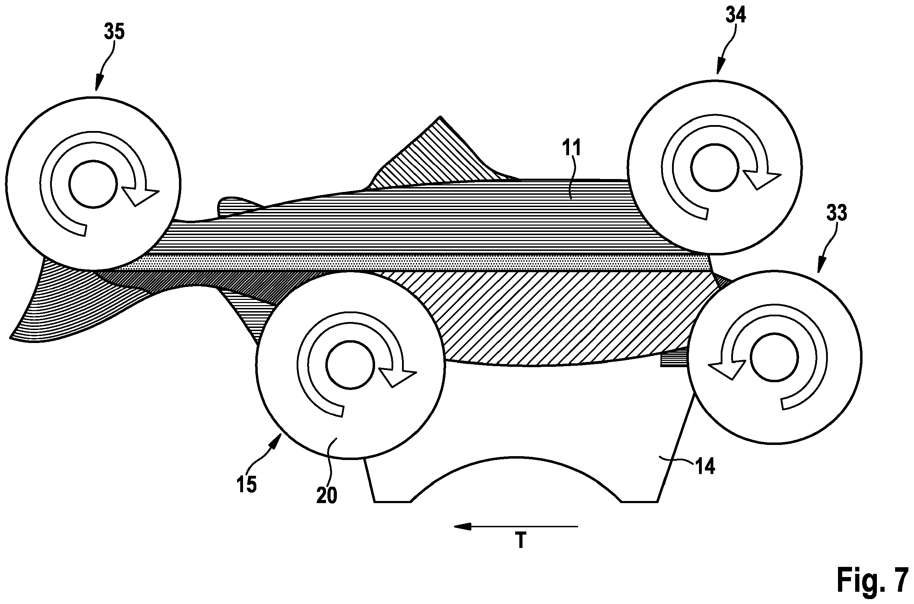

Anhand der Figur 7 wird die Anordnung der Aggregate grundsätzlich erläutert. In Transportrichtung T der Fische 11 treffen diese zunächst auf das Bauchmesseraggregat 33 und das Rückenmesseraggregat 34. Die Reihenfolge der Anordnung von Bauchmesseraggregat 33 und Rückenmesseraggregat 34 kann variieren. Vorzugsweise sind die Kreismesser des Bauchmesseraggregats 33 bei einer Transportrichtung T von rechts nach links (wie in der Ansicht der Figur 7) gegen den Uhrzeigersinn angetrieben. Die Kreismesser des Rückenmesseraggregats 34 sind vorzugsweise im Uhrzeigersinn angetrieben. In Transportrichtung T hinter dem Bauchmesseraggregat 33 und dem Rückenmesseraggregat 34 ist das Flankenmesseraggregat 15 angeordnet, dessen Kreismesser 20 vorzugsweise im Uhrzeigersinn angetrieben ist. Das gegenüberliegende Kreismesser 19 weist eine gegenläufige Drehrichtung auf. In Transportrichtung T hinter dem Flankenmesseraggregat 15 ist das Trennaggregat 35, dessen Trennmesser, vorzugsweise Kreismesser, vorzugsweise im Uhrzeigersinn angetrieben sind, angeordnet.

Die Steuerungseinrichtung der Filetiervorrichtung 32 kann auch zum Steuern aller Komponenten der Vorrichtung 10 ausgebildet und eingerichtet sein und insbesondere auch entsprechende Steuerungsprogramme umfassen. Die oder jede Steuerungseinrichtung kann auch an ein Intranet oder an ein externes Netzwerk angeschlossen sein.

Im Folgenden wird das Verfahren anhand der Zeichnung näher erläutert: Viele Fischarten haben im Bauchbereich paarig angeordnete Bauchflossen, die so genannten "pelvic fins". Nach dem Köpfen der Fische 11 werden diese direkt oder mit geöffneter und/oder entweideter Bauchhöhle auf einen Transportsattel 14 einer Transportvorrichtung 12 aufgesetzt. Zu beiden Seiten des Transportsattels 14 erstrecken sich die Flankengräten des Grätengerüstes, an und auf denen die aus Fleisch und Haut bestehenden Bauchlappen befestigt (im Sinne von angewachsen) sind. Die Bauchflossen befinden sich in einem im Wesentlichen konstanten Abstand zum Anus, der im Bereich des schwanzseitigen Endes der Bauchhöhle liegt.

Das Verfahren dient zum Bearbeiten von geköpften Fischen 11, nämlich zum Schneiden der Fischfilets der vorzugsweise bereits durch ein Bauchmesseraggregat 33 und ein Rückenmesseraggregat 34 bearbeiteten Fische 11 von den Flankengräten. Zunächst werden die geköpften Fischen 11 Schwanz voraus mittels einer einen Transportförderer 13 umfassenden Transportvorrichtung 12 in Transportrichtung T entlang eines Transportpfades in den Bereich eines Flankenmesseraggregats 15 transportiert. Das Flankenmesseraggregat 15 umfasst zwei Flankenmessereinheiten 16, 17, die auf einander gegenüberliegen Seiten des Transportförderers 13 liegen. Wenn die Fische 11 mit dem vorauslaufenden Ende ihrer Bauchhöhle den Bereich der Flankenmessereinheiten 16, 17 erreichen, werden die Flankenmessereinheiten 16, 17 relativ zum Transportförderer 13 aus einer Warteposition in eine Arbeitsposition bewegt. Wenn die Fische 11 dann in den Wirkbereich der Flankenmessereinheiten (16, 17) gelangen, werden die Fischfilets von den Flankengräten zu beiden Seiten des Transportpfads geschnitten. Dabei werden die Flankengräten beim Schneiden durch einen zwischen einem rotierend antreibbaren Kreismesser 19, 20 und einer Gegenlageanordnung 21, 22 der Flankenmessereinheiten 16, 17 gebildeten Schneidspalt S hindurchgeführt.

Erfindungsgemäß werden die Gegenlageanordnungen 21, 22 während des Schneidens der Fischfilets von den Flankengräten mindestens abschnittsweise zur temporären Vergrößerung des Schneidspalt S abgesenkt und dann wieder angehoben.

Dabei umfassen die Gegenlageanordnungen 21, 22 jeweils zwei Gegenlageelemente 24, 25; 26, 27, wobei erste Gegenlageelemente 24, 26 beider Gegenlageanordnungen 21, 22 einen Spaltabstand S_{A1} zum Kreismesser 19, 20 bilden und nicht aktiv ansteuerbar sind, und zweite Gegenlageelemente 25, 27 beider Gegenlageanordnungen 21, 22 separat angesteuert werden, derart, dass sich der Spaltabstand S_{A2} zum Kreismesser 19, 20 verändert und insbesondere vergrößert, wenn die Fische 11 mit ihren Bauchflossen die Kreismesser 19, 20 der Flankenmessereinheiten 16, 17 erreichen.

Der Beginn für das Flankenschneiden wird durch die vorauslaufende Spitze des Transportsattels 14 "signalisiert". Mit anderen Worten ist die Spitze des Transportsattels 14 der signifikante Punkt für den Beginn des Flankenschneidens. Das bedeutet, dass mit Eintreffen der Spitze des Transportsattels 14 in den Bereich der Kreismesser 19, 20 die Flankenmessereinheiten 16, 17 aus ihrer Warteposition nach oben in ihre Arbeitsposition bewegt werden. Dadurch tauchen die Kreismesser 19, 20 quasi von innen und unten zwischen die Flankengräten und das Fleisch der Fischfilets, so dass die Flankengräten unterhalb des Kreismessers 19, 20 und das Fleisch mit der Haut (also die Fischfilets bzw. Bauchlappen) oberhalb der Kreismesser 19, 20 entlanggleiten. Wenn der Fisch 11 mit seinen Bauchflossen den Bereich der Kreismesser 19, 20 erreicht, erfolgt das Trennen der Bauchflossen vom Fischfilet zum einen durch die freiliegenden Schneiden der in Arbeitsposition befindlichen Kreismesser 19, 20 und zum anderen durch das Absenken des zweiten Gegenlageelementes 25, 27 der Gegenlageanordnungen 21, 22. Durch das Absenken des zweiten Gegenlageelementes 25, 27 wird Platz geschaffen, den die räumliche Ausdehnung der Bauchflossen benötigt, um unter den Kreismessern 19, 20 im Bereich der Flankengräten zu laufen.

Der Weg bzw. Abstand vom Anus zu den Bauchflossen ("pelvic fins") ist im Wesentlichen konstant, und zwar unabhängig von der Größe der zu bearbeitenden Fische 11. In Kenntnis des Abstandes kann mittels der Steuerungseinrichtung ermittelt werden, wann die zweiten Gegenlageelemente 25, 27 zur Herstellung eines größeren Abstandes abgesteuert, also nach unten bewegt werden müssen und wann die zweiten Gegenlageelemente 25, 27 zur Herstellung des ursprünglichen Abstandes aufgesteuert, also nach oben bewegt werden müssen. Der ursprüngliche Abstand ist der Schneidspalt S, bei dem die Spaltanstände S_{A1} zwischen den ersten Gegenlageelementen 24, 26 und den Kreismessern 19, 20 und S_{A2} zwischen den zweiten Gegenlageelementen 25, 27 und den Kreismessern 19, 20 im Wesentlichen gleich sind. Abweichend davon wird der Spaltabstand S_{A2} zwischen den zweiten Gegenlageelementen 25, 27 und den Kreismessern 19, 20 temporär vergrößert.

Mit dem erfindungsgemäßen Verfahren wird demnach erreicht, dass die Fischfilets bzw. Bauchlappen entsprechend dem Transportfortschritt in variabler Ausrichtung, also zum einen vollständig auf den Gegenlageelementen 24, 25, 26, 27 aufliegend und zum anderen mindestens teilweise vom Gegenlageelement 24, 26 herabhängend, an den Kreismessern 19, 20 entlanggeführt werden, um eine individuelle und die Bauchflossen aussparende Schnittführung zu erreichen.

Bevorzugt werden die Fische 11 vor dem Flankenschneiden mittels eines Bauchmesseraggregats 33 und eines Rückenmesseraggregats 34 bearbeitet und nach dem Flankenschneiden mittels eines Trennaggregats 35 vollständig vom Grätengerüst gelöst. Zwei Kreismesser des Bauchmesseraggregats 33 schneiden dazu von der Schwanzwurzel bis zur Bauchhöhle untere Strahlengräten des Grätengerüstes bis zur Haupt-/Mittelgräte frei und tauchen dann in die Bauchhöhle eine. Zwei Kreismesser des Rückenmesseraggregats 34 schneiden von der Schwanzwurzel über die gesamte Fischlänge obere Strahlengräten des Grätengerüstes bis zur Hauptgräte frei. Die beiden Kreismesser 19, 20 des Flankenmesseraggregats 15 schneiden zu beiden Seiten (rechts und links) die beiden Fischfilets von den Flankengräten. Mittels zweier Trennmesser des Trennaggregats 35 werden die Fischfilets zu beiden Seiten (rechts und links) von der Schwanzwurzel bis zu den Flankengräten von der Hauptgräte geschnitten.

Dieses Verfahren wird besonders bevorzugt mit einer Filetiervorrichtung 32 nach Anspruch 10, die weiter oben beschrieben ist, ausgeführt.

## Patentansprüche

1. Vorrichtung (10), ausgebildet und eingerichtet zum Bearbeiten von geköpften Fischen (11), nämlich zum Schneiden der Fischfilets der vorzugsweise bereits durch ein Bauchmesseraggregat und ein Rückenmesseraggregat bearbeiteten Fische (11) von den Flankengräten, umfassend eine Transportvorrichtung (12), ausgebildet und eingerichtet zum Transport der Fische (11) in Transportrichtung T Schwanz voraus, wobei die Transportvorrichtung (12) einen endlos umlaufenden Transportförderer (13) mit mindestens einem Transportsattel (14) zum Aufnehmen und Fixieren eines Fisches (11) aufweist, ein Flankenmesseraggregat (15), wobei das Flankenmesseraggregat (15) zwei Flankenmessereinheiten (16, 17) aufweist, die zu beiden Seiten des Transportförderers (13) im Bereich einer Transportsattelführung (18) einander gegenüberliegen, und jede Flankenmessereinheit (16, 17) ein rotierend antreibbares Kreismesser (19, 20) sowie eine Gegenlageanordnung (21, 22) für das Kreismesser (19, 20) umfasst, wobei das Kreismesser (19, 20) zur Bildung eines Schneidspaltes S beabstandet zur Gegenlageanordnung (21, 22) angeordnet ist, sowie mindestens eine Steuerungseinrichtung zum Bewegen der Flankenmessereinheiten (16, 17) relativ zum Transportförderer (13) aus einer Warteposition in eine Arbeitsposition und zurück, wobei die Gegenlageanordnungen (21, 22) während des Bearbeitungsprozesses zur Veränderung der Größe des Schneidspaltes S ansteuerbar ausgebildet und eingerichtet sind, **dadurch gekennzeichnet, dass** jede Gegenlageanordnung (21, 22) mindestens zwei separate Gegenlageelemente (24, 25; 26, 27) umfasst, von denen ein erstes Gegenlageelement (24, 26) in einem einen Schneidspalt S bildenden Spaltabstand S_{A1} zum Kreismesser (19, 20) und gegen eine Federkraft bewegbar an der Flankenmessereinheit (16, 17) angeordnet und nicht aktiv ansteuerbar ist, und das
zweite Gegenlageelement (25, 27) zur Veränderung der Größe eines Schneidspalts S bildenden Spaltabstands S_{A2} separat ansteuerbar auf das Kreismesser (19, 20) zu und von dem Kreismesser (19, 20) weg bewegbar an der Flankenmessereinheit (16, 17) angeordnet ist.

2. Vorrichtung (10) nach Anspruch 1, **dadurch gekennzeichnet, dass** den Gegenlageanordnungen (21, 22) mindestens eine Steuerungseinrichtung zum Bewegen der Gegenlageanordnung (21, 22) relativ zum Kreismesser (19, 20) zugeordnet ist, derart, dass die Gegenlageanordnungen (21, 22) während des Bearbeitungsprozesses mindestens abschnittsweise relativ zum jeweiligen Kreismesser (19, 20) der Flankenmessereinheiten (16, 17) zur Veränderung der Größe des Schneidspaltes S bewegbar ausgebildet sind.

3. Vorrichtung (10) nach Anspruch 1 oder 2, **dadurch gekennzeichnet, dass** das erste Gegenlageelement (24, 26) eine im Wesentlichen rechteckförmige Stützfläche (28, 29) aufweist, wobei in einem in Transportrichtung T hinteren Bereich des ersten Gegenlageelementes (24, 26) auf der dem Transportförderer (13) abgewandten Seite ein Eckbereich der Stützfläche (28, 29) zur Bildung einer Aussparung (30) ausgespart ist, und dass das zweite im Wesentlichen sichelförmige Gegenlageelement (25, 27) im Bereich dieser Aussparung (30) angeordnet ist.

4. Vorrichtung (10) nach einem oder mehreren der Ansprüche 1 bis 3, **dadurch gekennzeichnet, dass** jeder Flankenmessereinheit (16, 17) eine Kurvensteuerung zugeordnet ist, mittels der die Flankenmessereinheiten (16, 17) aus der Warteposition in die Arbeitsposition und umgekehrt bewegbar sind, und dass jeder Gegenlageanordnung (21, 22) eine Kurvensteuerung zugeordnet ist, mittels der die Gegenlageanordnung (21, 22) mindestens abschnittsweise relativ zum Kreismesser (19, 20) bewegbar ist, wobei die Bewegungen der Flankenmessereinheiten (16, 17) und der Gegenlageanordnungen (21, 22) einander überlagerbar sind.

5. Vorrichtung (10) nach einem oder mehreren der Ansprüche 1 bis 4, **dadurch gekennzeichnet, dass** dem zweiten Gegenlageelement (25, 27) eine Kurvensteuerung zugeordnet ist, derart, dass das zweite Gegenlageelement (25, 27) aus einer ersten Position, in der das zweite Gegenlageelement (25, 27) die Aussparung (30) des ersten Gegenlageelementes (24, 26) im Wesentlichen ausfüllt und die Größen der Schneidspalte S zwischen dem ersten Gegenlageelement (24, 26) und dem Kreismesser (19, 20) und dem zweiten Gegenlageelement (25, 27) und dem Kreismesser (19, 20) im Wesentlichen gleich sind, in eine zweite Position, in der das zweite Gegenlageelement (25, 27) die Aussparung (30) des ersten Gegenlageelementes (24, 26) freigibt und den Schneidspalt S zwischen dem zweiten Gegenlageelement (25, 27) und dem Kreismesser (19, 20) vergrößert, und umgekehrt bewegbar, insbesondere schwenkbar ist.

6. Vorrichtung (10) nach einem oder mehreren der Ansprüche 1 bis 3, **dadurch gekennzeichnet, dass** jeder Flankenmessereinheit (16, 17) eine Kurvensteuerung zugeordnet ist, mittels der die Flankenmessereinheiten (16, 17) aus der Warteposition in die Arbeitsposition und umgekehrt bewegbar sind, und dass jeder Gegenlageanordnung (21, 22) ein elektrisch ansteuerbares Antriebsmittel zugeordnet ist, mittels dem die Gegenlageanordnung (21, 22) mindestens abschnittsweise relativ zum Kreismesser (19, 20) bewegbar ist, wobei die Bewegungen der Flankenmessereinheiten (16, 17) und der Gegenlageanordnungen (21, 22) einander überlagerbar sind.

7. Vorrichtung (10) nach Anspruch 1, 3 oder 6, **dadurch gekennzeichnet, dass** dem zweiten Gegenlageelement (25, 27) ein Pneumatikzylinder (31) zugeordnet ist, derart, dass das zweite Gegenlageelement (25, 27) aus einer ersten Position, in der das zweite Gegenlageelement (25, 27) die Aussparung (30) des ersten Gegenlageelementes (24, 26) im Wesentlichen ausfüllt und die Größen der Schneidspalte S zwischen dem ersten Gegenlageelement (24, 26) und dem Kreismesser (19, 20) und dem zweiten Gegenlageelement (25, 27) und dem Kreismesser (19, 20) im Wesentlichen gleich sind, in eine zweite Position, in der das zweite Gegenlageelement (25, 27) die Aussparung (30) des ersten Gegenlageelementes (24, 26) freigibt und den Schneidspalt S zwischen dem zweiten Gegenlageelement (25, 27) und dem Kreismesser (19, 20) vergrößert, und umgekehrt insbesondere linear bewegbar ist, wobei der Pneumatikzylinder (31) mit einer Steuerungseinrichtung verbunden ist.

8. Vorrichtung (10) nach einem oder mehreren der Ansprüche 1 bis 3, **dadurch gekennzeichnet, dass** sowohl den Gegenlageanordnungen (21, 22) als auch den Flankenmessereinheiten (16, 17) elektrisch ansteuerbare Antriebsmittel zum Verstellen der Position zugeordnet sind, wobei die Antriebsmittel über elektrische Verbindungen mit einer Steuerungseinrichtung verbunden sind.

9. Vorrichtung (10) nach Anspruch 7 oder 8, **dadurch gekennzeichnet, dass** die oder jede Steuerungseinrichtung mindestens ein Steuerungsprogramm beinhaltet, mittels dem die Flankenmessereinheiten (16, 17) während des Bearbeitungsprozesses zwischen ihren Positionen und/oder jede Gegenlageanordnung (21, 22) oder Gegenlageelemente (25, 27) davon während des Bearbeitungsprozesses zur Vergrößerung des den Schneidspalt S bildenden Spaltabstandes S_{A2} zum Kreismesser (19, 20) von diesem weg und zur Verringerung des Spaltabstandes S_{A2} zum Kreismesser (19, 20) auf dieses zu bewegbar sind.

10. Filetiervorrichtung (32), ausgebildet und eingerichtet zum vollständigen Abtrennen der Fischflets von geköpften Fischen (11), **gekennzeichnet durch** eine Vorrichtung (10) nach einem oder mehreren der Ansprüche 1 bis 9, ein Bauchmesseraggregat zum Bearbeiten der Bauchseite der geköpften Fische vom Schwanz bis in den Bereich des Anus der Fische sowie ein Rückenmesseraggregat zum Bearbeiten der Rückenseite der geköpften Fische über deren gesamte Länge, wobei das Bauchmesseraggregat und das Rückenmesseraggregat jeweils in Transportrichtung T vor dem Flankenmesseraggregat der Vorrichtung angeordnet sind, und ein Trennaggregat zum vollständigen Trennen der Fischfilets vom Grätengerüst der geköpften Fische, wobei das Trennaggregat in Transportrichtung T hinter dem Flankenmesseraggregat angeordnet ist, sowie eine Steuerungseinrichtung zum Steuern der Filetiervorrichtung.

11. Verfahren zum Bearbeiten von geköpften Fischen (11), nämlich zum Schneiden der Fischfilets der vorzugsweise bereits durch ein Bauchmesseraggregat und ein Rückenmesseraggregat bearbeiteten Fische (11) von den Flankengräten, umfassend die Schritte:
- Zuführen von geköpften Fischen (11) Schwanz voraus mittels einer einen Transportförderer (13) umfassenden Transportvorrichtung (12) in Transportrichtung T entlang eines Transportpfades in den Bereich eines Flankenmesseraggregats (15), wobei das Flankenmesseraggregat (15) zwei Flankenmessereinheiten (16, 17) umfasst, die auf einander gegenüberliegen Seiten des Transportförderers (13) liegen,
- Bewegen der Flankenmessereinheiten (16, 17) relativ zum Transportförderer (13) aus einer Warteposition in eine Arbeitsposition, wenn die Fische (11) mit dem vorauslaufenden Ende ihrer Bauchhöhle den Bereich der Flankenmessereinheiten (16, 17) erreichen,
- Schneiden der Fischfilets von den Flankengräten zu beiden Seiten des Transportpfads mittels jeweils einer Flankenmessereinheit (16, 17),
- wobei die Flankengräten beim Schneiden durch einen zwischen einem rotierend antreibbaren Kreismesser (19, 20) und einer Gegenlageanordnung (21, 22) der Flankenmessereinheiten (16, 17) gebildeten Schneidspalt S hindurchgeführt werden,
**dadurch gekennzeichnet, dass** die Gegenlageanordnungen (21, 22) während des Schneidens der Fischfilets von den Flankengräten mindestens abschnittsweise zur temporären Vergrößerung des Schneidspalt S abgesenkt und dann wieder angehoben werden, wobei die Gegenlageanordnungen (21, 22) jeweils zwei Gegenlageelemente (24, 25; 26, 27) umfassen, wobei erste Gegenlageelemente (24, 26) beider Gegenlageanordnungen (21, 22) einen Spaltabstand S_{A1} zum Kreismesser (19, 20) bilden und nicht aktiv ansteuerbar sind, und zweite Gegenlageelemente (25, 27) beider Gegenlageanordnungen (21, 22) separat angesteuert werden, derart, dass sich der Spaltabstand S_{A2} zum Kreismesser (19, 20) verändert und insbesondere vergrößert, wenn die Fische (11) mit ihren Bauchflossen die Kreismesser (19, 20) der Flankenmessereinheiten (16, 17) erreichen.

12. Verfahren nach Anspruch 11, **dadurch gekennzeichnet, dass** die Fische (11) vor dem Flankenschneiden mittels eines Bauchmesseraggregats (33) und eines Rückenmesseraggregats (34) bearbeitet werden, und dass die Fische (11) nach dem Flankenschneiden mittels eines Trennaggregats (35) vollständig vom Grätengerüst gelöst werden.

13. Verfahren nach Anspruch 11 oder 12, **dadurch gekennzeichnet, dass** es mit einer Filetiervorrichtung (32) nach Anspruch 10 ausgeführt wird.

## Claims

1. Apparatus (10), designed and configured for processing headed fish (11), namely for cutting the fish fillets of the fish (11), which preferably have already been processed by a ventral knife assembly and a dorsal knife assembly, from the flank bones, comprising a conveying apparatus (12), designed and configured for transporting the fish (11) tail-first in transport direction T, wherein the conveying apparatus (12) has an endlessly circulating transport conveyor (13) with at least one transport saddle (14) for receiving and securing a fish (11), a flank knife assembly (15), wherein the flank knife assembly (15) has two flank knife units (16, 17), opposing each other on both sides of the transport conveyor (13) in the region of a transport saddle guide (18), and each flank knife unit (16, 17) comprises a rotatably drivable circular knife (19, 20) as well as a counter-surface arrangement (21, 22) for the circular knife (19, 20), wherein the circular knife (19, 20) is arranged at a distance from the counter-surface arrangement (21, 22) to form a cutting gap S, as well as at least one control device for moving the flank knife units (16, 17) relative to the transport conveyor (13) from a standby position into a working position and back, wherein the counter-surface arrangements (21, 22) are designed and configured to vary the size of the cutting gap S controllably during the processing operation, **characterised in that** each counter-surface arrangement (21, 22) comprises at least two separate counter-surface elements (24, 25; 26, 27), of which a first counter-surface element (24, 26) is arranged on the flank knife unit (16, 17) at a fixed gap distance S_{A1} from the circular knife (19, 20), forming a cutting gap S, and movable against a spring force, and the second counter-surface element (25, 27) is arranged on the flank knife unit (16, 17) so as to be separately controllable and movable towards the circular knife (19, 20) and away from the circular knife (19, 20) for varying the size of a gap distance S_{A2}, forming a cutting gap S.

2. Apparatus (10) according to claim 1, **characterised in that** the counter-surface arrangements (21, 22) are associated with at least one control device for moving the counter-surface arrangement (21, 22) relative to the circular knife (19, 20) in such a manner that the counter-surface arrangements (21, 22) are designed to be movable, at least section by section, relative to the respective circular knife (19, 20) of the flank knife units (16, 17) for varying the size of the cutting gap S during the processing operation.

3. Apparatus (10) according to claim 1 or 2, **characterised in that** the first counter-surface element (24, 26) has a substantially rectangular support surface (28, 29), wherein a corner region of the support surface (28, 29) is recessed in a region of the first counter-surface element (24, 26), which is at the rear in transport direction T, on the side directed away from the transport conveyor (13) in order to form a recess (30), and **in that** the second substantially crescent-shaped counter-surface element (25, 27) is arranged in the region of this recess (30).

4. Apparatus (10) according to one or more of claims 1 to 3, **characterised in that** each flank knife unit (16, 17) is associated with a cam control, by means of which the flank knife units (16, 17) can be moved from the standby position into the working position and vice versa, and **in that** each counter-surface arrangement (21, 22) is associated with a cam control, by means of which the counter-surface arrangement (21, 22) can be moved, at least section by section, relative to the circular knife (19, 20), wherein the movements of the flank knife units (16, 17) and the counter-surface arrangements (21, 22) can be superimposed on each other.

5. Apparatus (10) according to one or more of claims 1 to 4, **characterised in that** the second counter-surface element (25, 27) is associated with a cam control in such a manner that the second counter-surface element (25, 27) can be moved, in particular can be pivoted, from a first position, in which the second counter-surface element (25, 27) substantially fills the recess (30) of the first counter-surface element (24, 26) and the sizes of the cutting gaps S between the first counter-surface element (24, 26) and the circular knife (19, 20) and the second counter-surface element (25, 27) and the circular knife (19, 20) are substantially identical, into a second position, in which the second counter-surface element (25, 27) uncovers the recess (30) of the first counter-surface element (24, 26) and increases the cutting gap S between the second counter-surface element (25, 27) and the circular knife (19, 20), and vice versa.

6. Apparatus (10) according to one or more of claims 1 to 3, **characterised in that** each flank knife unit (16, 17) is associated with a cam control, by means of which the flank knife units (16, 17) can be moved from the standby position into the working position and vice versa, and **in that** each counter-surface arrangement (21, 22) is associated with an electrically controllable drive means, using which the counter-surface arrangement (21, 22) can be moved, at least section by section, relative to the circular knife (19, 20), wherein the movements of the flank knife units (16, 17) and the counter-surface arrangements (21, 22) can be superimposed on each other.

7. Apparatus (10) according to claim 1, 3, or 6, **characterised in that** the second counter-surface element (25, 27) is associated with a pneumatic cylinder (31) in such a manner that the second counter-surface element (25, 27) can be moved, in particular can be moved linearly, from a first position, in which the second counter-surface element (25, 27) substantially fills the recess (30) of the first counter-surface element (24, 26) and the sizes of the cutting gaps S between the first counter-surface element (24, 26) and the circular knife (19, 20) and the second counter-surface element (25, 27) and the circular knife (19, 20) are substantially identical, into a second position, in which the second counter-surface element (25, 27) uncovers the recess (30) of the first counter-surface element (24, 26) and increases the cutting gap S between the second counter-surface element (25, 27) and the circular knife (19, 20), and vice versa, wherein the pneumatic cylinder (31) is connected to a control device.

8. Apparatus (10) according to one or more of claims 1 to 3, **characterised in that** both the counter-surface arrangements (21, 22) and the flank knife units (16, 17) are associated with electrically controllable drive means for adjusting the position, wherein the drive means are connected to a control device via electrical connections.

9. Apparatus (10) according to claim 7 or 8, **characterised in that** the or each control device includes at least one control program, by means of which the flank knife units (16, 17) can be moved during the processing operation between their positions and/or each counter-surface arrangement (21, 22) or counter-surface elements (25, 27) thereof can be moved during the processing operation, away from the circular knife for increasing the gap distance S_{A2} from the circular knife (19, 20), which forms the cutting gap S, and towards the circular knife for decreasing the gap distance S_{A2} from the circular knife (19, 20).

10. Filleting apparatus (32), designed and configured for completely separating the fish fillets from headed fish (11), **characterised by** an apparatus (10) according to one or more of claims 1 to 9, a ventral knife assembly for processing the ventral side of the headed fish from the tail to the anus region of the fish as well as a dorsal knife assembly for processing the dorsal side of the headed fish over their entire length, wherein the ventral knife assembly and the dorsal knife assembly are each arranged upstream of the flank knife assembly of the apparatus in transport direction T, and a separating assembly for completely separating the fish fillets from the skeleton of the headed fish, wherein the separating assembly is arranged downstream of the flank knife assembly in transport direction T, as well as a control device for controlling the filleting apparatus.

11. Method for processing headed fish (11), namely for cutting the fish fillets of the fish (11), which preferably have already been processed by a ventral knife assembly and a dorsal knife assembly, from the flank bones, comprising the steps:
- Feeding headed fish (11) tail-first by means of a conveying apparatus (12) comprising a transport conveyor (13) along a transport path in transport direction T into the region of a flank knife assembly (15), wherein the flank knife assembly (15) comprises two flank knife units (16, 17) which are situated on opposing sides of the transport conveyor (13),
- Moving the flank knife units (16, 17) relative to the transport conveyor (13) from a standby position into a working position when the fish (11) reach the region of the flank knife units (16, 17) with the leading end of their abdominal cavity,
- Cutting the fish fillets from the flank bones on both sides of the transport path by means of one flank knife unit (16, 17) in each case,
- wherein the flank bones are guided through a cutting gap S formed between a rotatably drivable circular knife (19, 20) and a counter-surface arrangement (21, 22) of the flank knife units (16, 17),
**characterised in that** the counter-surface arrangements (21, 22) are lowered at least section by section for temporarily increasing the cutting gap S during cutting of the fish fillets from the flank bones and are then raised again, wherein the counter-surface arrangements (21, 22) each comprise two counter-surface elements (24, 25; 26, 27), wherein first counter-surface elements (24, 26) of both counter-surface arrangements (21, 22) form a fixed gap distance S_{A1} from the circular knife (19, 20), and second counter-surface elements (25, 27) of both counter-surface arrangements (21, 22) are separately controlled in such a manner that the gap distance S_{A2} from the circular knife (19, 20) varies and in particular increases when the fish (11) reach the circular knives (19, 20) of the flank knife units (16, 17) with their ventral fins.

12. Method according to claim 11, **characterised in that** the fish (11) are processed by means of a ventral knife assembly (33) and a dorsal knife assembly (34) before flank cutting, and **in that** the fish (11) are detached completely from the skeleton by means of a separating assembly (35) after flank cutting.

13. Method according to claim 11 or 12, **characterised in that** said method is carried out with a filleting apparatus (32) according to claim 10.

## Revendications

1. Dispositif (10), conçu et configuré pour traiter des poissons étêtés (11), notamment destiné à couper hors des arêtes de flanc les filets de poisson des poissons (11) qui ont été de préférence déjà traités par un assemblage de lames ventrales et un assemblage de lames dorsales, comprenant un dispositif de convoyage (12) conçu et configuré pour transporter les poissons (11), queue la première, dans la direction de transport T, dans lequel le dispositif de convoyage (12) a un convoyeur de transport à circulation sans fin (13) avec au moins une selle de transport (14) destinée à recevoir et à fixer un poisson (11), un assemblage de lames de flanc (15), dans lequel l'assemblage de lames de flanc (15) a deux unités de lames de flanc (16, 17), opposées l'une à l'autre sur les deux cotés du convoyeur de transport (13) dans la région d'un guide de selle de transport (18), et chaque unité de lames de flanc (16, 17) comprend une lame circulaire (19, 20) pouvant être entrainée en rotation ainsi qu'un agencement de contre-appui (21, 22) pour la lame circulaire (19, 20), dans lequel la lame circulaire (19, 20) est agencée pour former un intervalle de coupe S distant de l'agencement de contre-appui (21, 22), ainsi que d'au moins un système de commande destiné à déplacer les unités de lames de flanc (16, 17) relativement au convoyeur de transport (13) depuis une position de veille jusque dans une position de travail et inversement, dans lequel les agencements de contre-appui (21, 22) sont conçus et configurés de manière pilotable pour modifier la taille de l'intervalle de coupe S pendant le processus de traitement, **caractérisé en ce que** chaque agencement de contre-appui (21, 22) comprend au moins deux éléments de contre-appui (24, 25 ; 26, 27) séparés, dont un premier élément de contre-appui (24, 26) est agencé au niveau de l'unité de lames de flanc (16, 17) dans une distance d'intervalle S_{A1} formant un intervalle de coupe S par rapport à la lame circulaire (19, 20) et de manière mobile à l'encontre d'une force de ressort, et n'est pas pilotable activement, et le second élément de contre-appui (25, 27) est agencé au niveau de l'unité de lames de flanc (16, 17) pour modifier la taille d'une distance d'intervalle S_{A2} formant un intervalle de coupe S de manière mobile et séparément pilotable en direction de la lame circulaire (19, 20) et en éloignement de la lame circulaire (19, 20).

2. Dispositif (10) selon la revendication 1, **caractérisé en ce qu'**il est associé aux agencements de contre-appui (21, 22) au moins un système de commande destiné à déplacer l'agencement de contre-appui (21, 22) relativement à la lame circulaire (19, 20), de telle façon que les agencements de contre-appui (21, 22), pendant le processus de traitement, sont conçus de manière à pouvoir être déplacés, au moins section par section, relativement à la lame circulaire (19, 20) respective des unités de lames de flanc (16, 17) pour modifier la taille de l'intervalle de coupe S.

3. Dispositif (10) selon la revendication 1 ou 2, **caractérisé en ce que** le premier élément de contre-appui (24, 26) présente une surface de support (28, 29) sensiblement de forme rectangulaire, dans lequel une région de coin de la surface de support (28, 29) est évidée dans une région du premier élément de contre-appui (24, 26), qui est à l'arrière dans la direction de transport T, sur le côté détourné du convoyeur de transport (13) afin de former un évidement (30), et **en ce que** le second élément de contre-appui (25, 27), sensiblement en forme de faucille, est agencé dans la région de cet évidement (30).

4. Dispositif (10) selon l'une ou plusieurs des revendications 1 à 3, **caractérisé en ce qu'**il est associé à chaque unité de lames de flanc (16, 17) une commande de virage au moyen de laquelle les unités de lames de flanc (16, 17) peuvent être déplacées depuis la position de veille jusque dans la position de travail et inversement, et **en ce qu'**il est associé à chaque agencement de contre-appui (21, 22) une commande de virage au moyen de laquelle l'agencement de contre-appui (21, 22) peut être déplacé au moins section par section relativement à la lame circulaire (19, 20), dans lequel les déplacements des unités de lames de flanc (16, 17) et des agencements de contre-appui (21, 22) peuvent être superposés les uns sur les autres.

5. Dispositif (10) selon l'une ou plusieurs des revendications 1 à 4, **caractérisé en ce qu'**il est associé au second élément de contre-appui (25, 27) une commande de virage de telle façon que le second élément de contre-appui (25, 27) peut être déplacé, et en particulier pivoté, depuis une première position dans laquelle le second élément de contre-appui (25, 27) remplit sensiblement l'évidement (30) du premier élément de contre-appui (24, 26) et les tailles de l'intervalle de coupe S entre le premier élément de contre-appui (24, 26) et la lame circulaire (19, 20) et le second élément de contre-appui (25, 27) et la lame circulaire (19, 20) sont sensiblement identiques, jusque dans une seconde position dans laquelle le second élément de contre-appui (25, 27) libère l'évidement (30) du premier élément de contre-appui (24, 26) et agrandit l'intervalle de coupe S entre le second élément de contre-appui (25, 27) et la lame circulaire (19, 20), et inversement.

6. Dispositif (10) selon l'une ou plusieurs des revendications 1 à 3, **caractérisé en ce qu'**il est associé à chaque unité de lames de flanc (16, 17) une commande de virage au moyen de laquelle les unités de lames de flanc (16, 17) peuvent être déplacées depuis la position de veille jusque dans la position de travail et inversement, et **en ce qu'**il est associé à chaque agencement de contre-appui (21, 22) un moyen d'entraînement électriquement pilotable par le biais duquel l'agencement de contre-appui (21, 22) peut être déplacé au moins section par section relativement à la lame circulaire (19, 20), dans lequel les déplacements des unités de lames de flanc (16, 17) et des agencements de contre-appui (21, 22) peuvent être superposés les uns sur les autres.

7. Dispositif (10) selon la revendication 1, 3 ou 6, **caractérisé en ce qu'**il est associé au second élément de contre-appui (25, 27) un vérin pneumatique (31) de telle façon que le second élément de contre-appui (25, 27) peut être déplacé, et en particulier linéairement, depuis une première position dans laquelle le second élément de contre-appui (25, 27) remplit sensiblement l'évidement (30) du premier élément de contre-appui (24, 26) et les tailles de l'intervalle de coupe S entre le premier élément de contre-appui (24, 26) et la lame circulaire (19, 20) et le second élément de contre-appui (25, 27) et la lame circulaire (19, 20) sont sensiblement identiques, jusque dans une seconde position dans laquelle le second élément de contre-appui (25, 27) libère l'évidement (30) du premier élément de contre-appui (24, 26) et agrandit l'intervalle de coupe S entre le second élément de contre-appui (25, 27) et la lame circulaire (19, 20), et inversement, dans lequel le vérin pneumatique (31) est relié à un système de commande.

8. Dispositif (10) selon l'une ou plusieurs des revendications 1 à 3, **caractérisé en ce qu'**il est associé tant aux agencements de contre-appui (21, 22) qu'aux unités de lames de flanc (16, 17) des moyens d'entraînement électriquement pilotables pour ajuster la position, dans lequel les moyens d'entraînement sont reliés à un système de commande via des connexions électriques.

9. Dispositif (10) selon la revendication 7 ou 8, **caractérisé en ce que** le ou chaque système de commande contient au moins un programme de commande au moyen duquel les unités de lames de flanc (16, 17), pendant le processus de traitement, peuvent être déplacées entre leurs positions et/ou chaque agencement de contre-appui (21, 22) ou élément de contre-appui (25, 27) de celui-ci, pendant le processus de traitement, pour agrandir la distance d'intervalle S_{A2} formant l'intervalle de coupe S par rapport à la lame circulaire (19, 20) en éloignement de celle-ci et pour réduire la distance d'intervalle S_{A2} par rapport à la lame circulaire (19, 20) en direction de celle-ci.

10. Dispositif de filetage (32), conçu et configuré pour séparer entièrement les filets de poisson de poissons étêtés (11), **caractérisé par** un dispositif (10) selon l'une ou plusieurs des revendications 1 à 9, un assemblage de lames ventrales destiné à traiter le côté ventre des poissons étêtés depuis la queue jusqu'à la région de l'anus des poissons, ainsi qu'un assemblage de lames dorsales destiné à traiter le côté dos des poissons étêtés sur toute la longueur, dans lequel l'assemblage de lames ventrales et l'assemblage de lames dorsales sont chacun agencé dans la direction de transport T devant l'assemblage de lames de flanc du dispositif, et un assemblage de séparation destiné à séparer entièrement les filets de poisson de la structure d'arêtes des poissons étêtés, dans lequel l'assemblage de séparation est agencé derrière l'assemblage de lames de flanc dans la direction de transport T, ainsi qu'un système de commande destiné à commander le dispositif de filetage.

11. Procédé pour traiter des poissons étêtés (11), notamment pour couper hors des arêtes de flanc les filets de poisson des poissons (11) qui ont été de préférence déjà traités par un assemblage de lames ventrales et un assemblage de lames dorsales, comprenant les étapes consistant à :
- alimenter des poissons étêtés (11), queue la première, au moyen d'un dispositif de transport (12) comprenant un convoyeur de transport (13) dans une direction de transport T le long d'un trajet de transport dans la région d'un assemblage de lames de flanc (15), dans lequel l'assemblage de lames de flanc (15) comprend deux unités de lames de flanc (16, 17) qui se trouvent sur des cotés opposés du convoyeur de transport (13),
- déplacer les unités de lames de flanc (16, 17) relativement au convoyeur de transport (13) depuis une position de veille jusque dans une position de travail, quand les poissons (11) atteignent la zone des unités de lames de flanc (16, 17) avec l'extrémité d'attaque de leur cavité abdominale,
- couper les filets de poisson hors des arêtes de flanc des deux côtés du trajet de transport au moyen d'une unité de lames de flanc (16, 17) dans chaque cas,
- dans lequel les arêtes de flanc, lors de la coupe, sont guidées à travers un intervalle de coupe S formé entre une lame circulaire pouvant être entraînée en rotation (19, 20) et un agencement de contre-appui (21, 22) des unités de lames de flanc (16, 17),
**caractérisé en ce que** les agencements de contre-appui (21, 22), pendant la coupe des filets de poisson hors des arêtes de flanc, sont abaissés au moins section par section pour agrandir temporairement l'intervalle de coupe S, puis sont à nouveau relevés, dans lequel les agencements de contre-appui (21, 22) comprennent chacun deux éléments de contre-appui (24, 25 ; 26, 27), dans lequel des premiers éléments de contre-appui (24, 26) des deux agencements de contre-appui (21, 22) forment une distance d'intervalle S_{A1} par rapport à la lame circulaire (19, 20) et ne sont pas pilotables activement, et des seconds éléments de contre-appui (25, 27) des deux agencements de contre-appui (21, 22) sont pilotés séparément, de telle façon que la distance d'intervalle S_{A2} par rapport à la lame circulaire (19, 20) se modifie et en particulier s'agrandit quand le poisson (11) atteint les lames circulaires (19, 20) des unités de lames de flanc (16, 17) avec leurs nageoires ventrales.

12. Procédé selon la revendication 11, **caractérisé en ce que** les poissons (11) sont traités au moyen d'un assemblage de lames ventrales (33) et d'un assemblage de lames dorsales (34) avant la coupe des flancs, et **en ce que** les poissons (11) sont entièrement détachés de la structure d'arêtes au moyen d'un assemblage de séparation (35) après la coupe des flancs.

13. Procédé selon la revendication 11 ou 12, **caractérisé en ce qu'**il est exécuté avec un dispositif de filetage (32) selon la revendication 10.
